(19) Europäisches Patentamt / European Patent Office / Office européen des brevets

(11) EP 3 891 552 B1

(12) # EUROPÄISCHE PATENTSCHRIFT

(45) Veröffentlichungstag und Bekanntmachung des Hinweises auf die Patenterteilung:
**20.04.2022 Patentblatt 2022/16**

(21) Anmeldenummer: **19835247.8**

(22) Anmeldetag: **28.11.2019**

(51) Internationale Patentklassifikation (IPC):
***G02C 7/02*** *(2006.01)*

(52) Gemeinsame Patentklassifikation (CPC):
**G02C 7/028**

(86) Internationale Anmeldenummer:
**PCT/EP2019/082991**

(87) Internationale Veröffentlichungsnummer:
**WO 2020/114886 (11.06.2020 Gazette 2020/24)**

(54) **BRILLENGLAS, FAMILIE VON BRILLENGLÄSERN, VERFAHREN ZUM ENTWURF EINER FAMILIE VON BRILLENGLÄSERN UND VERFAHREN ZUM HERSTELLEN EINES BRILLENGLASES**

SPECTACLE LENS, FAMILY OF SPECTACLE LENSES, METHOD FOR DESIGNING A SPECTACLE LENS FAMILY AND METHOD FOR PRODUCING A SPECTACLE LENS

VERRE DE LUNETTES, FAMILLE DE VERRES DE LUNETTES, PROCÉDÉ DE CONCEPTION D’UNE FAMILLE DE VERRES DE LUNETTES ET PROCÉDÉ DE FABRICATION D’UN VERRE DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2018 EP 18209854**

(43) Veröffentlichungstag der Anmeldung:
**13.10.2021 Patentblatt 2021/41**

(73) Patentinhaber: **Carl Zeiss Vision International GmbH**
**73430 Aalen (DE)**

(72) Erfinder: **WELSCHER, Markus**
**73492 Rainau (DE)**

(74) Vertreter: **PATERIS Patentanwälte PartmbB**
**Danckelmannstraße 9**
**14059 Berlin (DE)**

(56) Entgegenhaltungen:
**EP-A1- 2 821 840**
**WO-A1-2015/110432**
**WO-A1-2018/071835**
**US-A- 3 960 442**
**US-A1- 2006 132 708**
**US-A1- 2010 149 492**
**US-A1- 2015 124 214**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 891 552 B1

## Beschreibung

Die vorliegende Erfindung betrifft ein Brillenglas zum Erzielen einer rezeptgemäßen sphärischen Wirkung und einer rezeptgemäßen astigmatischen Wirkung, welches eine rotationssymmetrische Brillenglasvorderfläche und eine atorische Brillenglasrückfläche aufweist. Daneben betrifft die Erfindung eine Familie von derartigen Brillengläsern. Außerdem betrifft die Erfindung ein computerimplementiertes Verfahren zum Entwerfen einer derartigen Familie von Brillengläsern und ein nichtflüchtiges computerlesbares Speichermedium mit darauf gespeicherten Instruktionen zum Ausführen des Verfahrens auf einem Computer. Schließlich betrifft die Erfindung auch ein Verfahren zum Herstellen eines Brillenglases. Brillengläser, insbesondere auch Einstärken-Brillengläser, also solche Brillengläser, bei denen von der Konstruktion her nur eine dioptrische Wirkung vorhanden ist, werden mit Asphären versehen, um Bildfehler zu reduzieren oder um flachere Brillengläser herstellen zu können, ohne dabei die Bildfehler des Brillenglases zu vergrößern. Ein Beispiel für ein mit einer Asphäre versehenes Brillenglas ist in EP 2 821 840 A1 beschrieben. Darüber hinaus beschreibt die US 2006/0132708 A1 ein Brillenglas mit einer atorischen Fläche.

Brillengläser können für dieselbe rezeptgemäße Wirkung unterschiedliche Bildfehlerverteilungen über die Brillenglasfläche aufweisen, wobei eine Bildfehlerverteilung die Abweichung der rezeptgemäßen Wirkung des Brillenglases von der mit ihm tatsächlich erzielten Wirkung an unterschiedlichen über das Brillenglases verteilten Punkten des Brillenglases beschreibt und wobei je nach Anwendungsbereich des Brillenglases unterschiedliche Bildfehlerverteilungen als optimal angesehen werden können. Beispielsweise kann die als optimal angesehene Bildfehlerverteilung davon abhängen, ob eher die sphärischen Bildfehler oder die astigmatischen Bildfehler als störend angesehen werden. Zum Vermindern der Bildfehler in der Bildfehlerverteilung findet eine Asphärisierung einer Brillenglasfläche statt, um die für die jeweilige rezeptgemäße Wirkung als optimal angesehene Bildfehlerverteilung möglichst gut zu erreichen. Bei Asphärischen FSV-Brillengläsern (FSV-Brillenglas: Finished Single Vision Brillenglas, zu Deutsch: Fertiggestelltes Einstärken-Brillenglas) finden zur Produktion der Brillengläser typischerweise eine asphärische Vorderformschale und eine torische Rückformschale Verwendung, mit deren Hilfe ein Fertigfabrikat abgegossen wird. Bei dieser Art der Herstellung befindet sich dann die asphärische Fläche auf der Brillenglasvorderfläche und die mit dem Torus versehene Fläche bildet die Rückfläche, mit der die rezeptgemäße Wirkung realisiert wird. Mit anderen Worten, die Asphärisierung der Vorderfläche dient dazu, die Bildfehlerverteilung zu optimieren, und die Brillenglasrückfläche dazu, die rezeptgemäße Wirkung bereitzustellen. Bei diesem Herstellungsverfahren wird üblicherweise die asphärische Fläche für die Brillenglasvorderfläche für die rezeptgemäße sphärische Wirkung optimiert, um dann für mehrere rezeptgemäße sphärische und astigmatische Wirkungen Verwendung zu finden. Zum Herstellen eines Brillenglases einer FSV-Brillenglasfamilie wird typischerweise jeweils eine Vorderformschale und eine Rückformschale aus einer Menge an Vorderformschalen bzw. Rückformschalen ausgewählt und kombiniert. Dabei kann beispielsweise ein Satz von Rückformschalen jeweils eine sphärische und mehrere torische Rückformschalen bspw. bis zu einem Zylinderwert von -2 Dioptrien umfassen, die jeweils mit einer Anzahl an asphärischen Vorderformschalen kombiniert werden können. Man benutzt einen Satz von Rückformschalen für typischerweise vier sphärische Verordnungen (also z.B. von Sph -1.25D bis Sph -2.0D) hauptsächlich weil über einen solchen Bereich der Schrumpf ähnlich ist. Über den Bereich von 4 sphärischen Verordnungen hinaus muss man dann einen anderen Korrekturfaktor für den Schrumpf vorhalten. Da die asphärischen Flächen der Vorderformschalen nur für eine sphärische Rezeptwirkung optimiert sind, wird die beabsichtigte optische Korrektion, die mit der Asphäre erreicht werden soll, vor allem mit zunehmender rezeptgemäßer astigmatischer Wirkung immer mehr verfehlt. Dies liegt daran, dass, wenn die asphärische Fläche nur für sphärische Wirkungen optimiert ist und dann für viele rezeptgemäße astigmatische Wirkung Verwendung findet, die so entstehenden Brillengläser maximal in einem Hauptschnitt die bei der Optimierung der asphärischen Fläche beabsichtigte optische Korrektion aufweisen. Dies bedeutet, dass zumindest im Falle einer rezeptgemäßen astigmatischen Wirkung die Asphäre in einem der Hauptschnitte nicht für die benötigte rezeptgemäße Wirkung optimiert ist. Wollte man eine Verbesserung der mit der asphärischen Fläche zu erzielenden Korrektion erreichen, so müsste die Anzahl der optimierten asphärischen Flächen, und damit die Anzahl der Vorderformschalen, deutlich erhöht werden. Außerdem müsste die Asphärisierung der Brillenglasvorderfläche auch an die rezeptgemäße astigmatische Wirkung angepasst werden, was außer zu einer Erhöhung der Anzahl an Vorderflächenformschalen für die Herstellung einer Familie von Brillengläsern auch dazu führt, dass die asphärischen Brillenglasvorderflächen nicht mehr rotationssymmetrisch sind, so dass bei der Herstellung eines Brillenglases die Achslagen der von den Vorderflächenformschalen und Rückflächenformschalen definierten Brillenglasflächen in Übereinstimmung gebracht werden müssten. Dies würde das Herstellungsverfahren erheblich verkomplizieren.

Aus WO 2018/071835 A1 ist eine Familie von Brillengläsern bekannt, in der die Brillenglasvorderflächen sphärisch und die Brillenglasrückflächen asphärisch atorisch oder als Freiformflächen ausgebildet sind. Als Vorteil dieser Ausgestaltung wird es dabei angesehen, für die Brillenglasvorderfläche diejenige Grundkurve zu verwenden, welche die größte Krümmung aufweist und es noch ermöglicht, die Rückfläche mit existierenden Mitteln herzustellen. Durch die stark gekrümmte Grundkurve wird es außerdem möglich, Bildfehlerverteilungen über das Brillenglas zu minimieren. Es können gemäß der Lehre der WO 2018/071835 A1 insbesondere Brillengläser mit derselben Flächenbrechkraft der Brillenglasvorderfläche und unterschiedlichen dioptrischen Wirkungen oder mit derselben Flächenbrechkraft der Brillenglasrückfläche und unterschiedlichen dioptrischen Wirkungen vorhanden sein.

Die US 2010/149492 A1 offenbart ein Brillenglas zum Erzielen einer rezeptgemäßen sphärischen Wirkung und einer rezeptgemäßen astigmatischen Wirkung, welches eine rotationssymmetrische Brillenglasvorderfläche aufweist. Die Rückfläche weist eine zentrale Zone auf, die asphärisiert oder atorisiert sein kann. Eine periphere Zone der Rückfläche ist ja nach Geometrie der Vorderfläche sphärisch oder torisch ausgebildet.

Aus US 3,960,442 ist eine Familie von Brillengläser mit konkaven Grundkrümmungen, die auf der Rückfläche des Brillenglases definiert sind, benannt. Die Familie von Brillengläser kann ein ein asphärisches oder ein atorisches Designkonzept beinhalten.

Gegenüber diesem Stand der Technik ist es Aufgabe der vorliegenden Erfindung, ein Brillenglas für eine Familie von Brillengläsern, eine Familie von Brillengläsern, ein Verfahren zum Entwerfen einer Familie von Brillengläsern und ein Verfahren zum Herstellen eines Brillenglases zur Verfügung zu stellen, die es ermöglichen, die Brillengläser der Familie von Brillengläsern mit einer geringen Anzahl an vorgegebenen Brillenglasvorderflächen und Brillenglasrückflächen zu realisieren und dabei trotzdem die optische Bildfehlerverteilung auch im Falle zunehmender rezeptgemäßer astigmatischer Wirkung gut erreichen zu können.

Diese Aufgabe wird durch ein computerimplementiertes Verfahren zum Entwurf einer Familie von Brillengläsern nach Anspruch 1, ein nichtflüchtiges computerlesbares Speichermedium nach Anspruch 4 sowie ein Verfahren zum Herstellen eines Brillenglases nach Anspruch 7 gelöst. Die abhängigen Ansprüche enthalten vorteilhafte Ausgestaltungen der Erfindung.

Ein Brillenglas zum Erzielen einer rezeptgemäßen sphärischen Wirkung, die auch null sein kann, und eine rezeptgemäßen astigmatischen Wirkung, die auch null sein kann, das der mit dem erfindungsgemäßen Verfahren entworfenen Familie von Brillengläsern angehört weist eine rotationssymmetrische Brillenglasvorderfläche, d.h. eine sphärische oder rotationssymmetrische asphärische Brillenglasvorderfläche, und eine atorische Brillenglasrückfläche auf. Eine atorische Brillenglasrückfläche ist dabei eine Brillenglasrückfläche, die zwei zueinander senkrechte Hauptschnitte unterschiedlicher Krümmung besitzt und bei der der Querschnitt in mindestens einem der Hauptschnitte nicht kreisförmig ist, wobei die Hauptschnitte diejenigen Meridianebenen einer Fläche mit maximaler oder minimaler gemessener Krümmung dieser Fläche sind. Eine Meridianebene ist dabei eine Ebene, die den Krümmungsmittelpunkt der Fläche enthält.

Im Brillenglas liegt bei der atorischen Brillenglasrückfläche in wenigstens einem Hauptschnitt eine derartige Abweichung des Krümmungsverlauf von der Kreisform vor, dass bei einem Wert für den Abstand zwischen dem Scheitel der Brillenglasrückfläche und dem Augendrehpunkt, der in einem Bereich liegt, welcher sich von 15 mm bis 40 mm erstreckt und sich insbesondere von 20 bis 30 mm erstrecken kann, an jedem Punkt eines innerhalb eines Radius von 25 mm um die geometrische Brillenglasmitte gelegenen Brillenglasbereiches eine obere Grenze der Gesamtabweichung RMS = Sqrt(SphAbw$^2$ + (astAbw/2)$^2$) der Wirkung nicht überschritten wird, wobei die obere Grenze der Gesamtabweichung durch

$$0{,}25D - MIN[(0{,}05*Sph - 0{,}1*|Zyl|);0]$$

gegeben ist und wobei

Sph den Wert "Sphäre" der rezeptgemäßen sphärischen Wirkung,

Zyl den Wert "Zylinder" der rezeptgemäßen astigmatischen Wirkung, der den Wer Null oder einen negativen Wert annehmen kann, insbesondere einen Wert aus dem Intervall [0D, -3D],

|Zyl| den Betrag des "Zylinder"-Werts,

sphAbw die Abweichung der rezeptgemäßen sphärischen Wirkung des Brillenglases von der mit ihm tatsächlich erzielten sphärischen Wirkung,

astAbw die Abweichung der rezeptgemäßen astigmatischen Wirkung des Brillenglases von der mit ihm tatsächlich erzielten astigmatischen Wirkung und

MIN die Minimumfunktion

bezeichnen. Mit anderen Worten, im gesamten innerhalb des Radius von 25 mm um die geometrische Brillenglasmitte gelegenen Brillenglasbereiches gilt für die Gesamtabweichung

$$RMS \leq 0{,}25D - MIN[(0{,}05*Sph - 0{,}1*|Zyl|);0]$$

und vorzugsweise sogar

$$RMS \leq 0{,}18D - MIN[(0{,}045*Sph - 0{,}09*|Zyl|);0].$$

Die Gesamtabweichung RMS ist dabei der quadratische Mittelwert (engl.: Root Mean Square, RMS).

Aufgrund der Ausbildung der Brillenglasrückfläche als atorische Brillenglasrückfläche kann für jede astigmatische Wirkung eine dazu passende Asphäre für die Hauptschnitte des Brillenglases zur Verfügung gestellt werden, so dass auch die gewünschte Korrektur der Bildfehler in beiden Hauptschnitten erfolgen kann. Wenn nun ein Satz von atorischen Brillenglasrückflächen jeweils für einen bestimmten Bereich von sphärischen Wirkungen Verwendung findet, d.h. mit mehreren sphärischen oder rotationssymmetrisch asphärischen Brillenglasvorderflächen kombiniert wird, so kann eine gesamte Familie von Brillengläsern mit durchgehend geringen Bildfehlern und einer relativ geringen Anzahl an Brillenglasvorderflächen und Brillenglasrückflächen realisiert werden. Insbesondere sind nicht mehr Brillenglasvorderflächen und Brillenglasrückflächen nötig, als wenn die Bildfehlerverteilung durch eine Asphärisierung der Brillenglasvorderflächen optimiert wird, wie dies eingangs beschrieben worden ist. Gegenüber der Asphärisierung der Brillenglasvorderflächen zum Optimieren der Bildfehlerverteilung bei der Korrektur einer rezeptgemäßen astigmatischen Wirkung bietet das Optimieren der Bildfehlerverteilung anhand der atorischen Brillenglasrückfläche neben dem Vorteil der Verringerung der Bildfehler zudem den Vorteil, dass keine bevorzugte Orientierung zwischen der Brillenglasrückfläche und der Brillenglasvorderfläche eingehalten werden muss.

Wenn sich bei einer atorischen Fläche die Krümmungsradien und die nicht kreisförmigen Querschnitte in beiden Hauptschnitten einander annähern, erhält mein im Grenzfall gleicher Krümmungsradien und gleicher nicht kreisförmiger Querschnitte in beiden Hauptschnitten eine asphärische Fläche. Eine asphärische Fläche stellt in diesem Sinne eine spezielle Form der atorischen Fläche dar und soll im Rahmen der vorliegenden Erfindung von dem Begriff atorische Fläche mit umfasst sein. Eine Fläche in der sich die Krümmungsradien in beiden Hauptschnitten voneinander unterscheiden und in der der Querschnitt in mindestens einem der Hauptschnitte von der Kreisform abweicht, wird im Rahmen der vorliegenden Beschreibung als echte atorische Fläche bezeichnet. Das der mit dem erfindungsgemäßen Verfahren entworfenen Familie von Brillengläsern angehörende Brillenglas kann als atorische Brillenglasrückfläche insbesondere eine echte atorische Brillenglasrückfläche, d. h. eine Brillenglasrückfläche, die eine echte atorische Fläche ist, aufweisen.

In einer vorteilhaften Weiterbildung der Erfindung werden Werte für sphAbw, die kleiner als Null sind, in der Gleichung $RMS = Sqrt(SphAbw^2 + (astAbw/2)^2)$ für die Gesamtabweichung gleich Null gesetzt. Abweichungen der rezeptgemäßen sphärischen Wirkung des Brillenglases von der mit ihm tatsächlich erzielten sphärischen Wirkung, die kleiner als Null sind, können zu Null angenommen werden, weil negative Abweichungen der rezeptgemäßen sphärischen Wirkung des Brillenglases von der mit ihm tatsächlich erzielten sphärischen Wirkung, soweit sie einen gewissen Betrag nicht überschreiten, vom Brillenträger akkommodiert werden können, und somit nicht zum Bildfehler des Brillenglases beitragen. In dieser Ausgestaltung des Brillenglases sind daher nur solche Werte für die Abweichung der rezeptgemäßen sphärischen Wirkung des Brillenglases von der mit ihm tatsächlich erzielten sphärischen Wirkung berücksichtigt, die auch tatsächlich zum Bildfehler beitragen. Im der Familie von Brillengläsern werden negative Abweichungen der rezeptgemäßen sphärischen Wirkung des Brillenglases von der mit ihm tatsächlich erzielten sphärischen Wirkung, wenn überhaupt, nur in einer Größe im Bereich von [0;-1D] erreicht.

Die Brillengläser der mit dem erfindungsgemäßen Verfahren entworfenen Familie von Brillengläsern können typischerweise für die Korrektur einer Fehlsichtigkeit in der Ferne optimiert sein. Sie werden dann üblicherweise nicht von Personen mit fortgeschrittener Alterssichtigkeit getragen, so dass davon ausgegangen werden kann, dass die die Brillengläser tragenden Personen solch geringe Werte akkommodieren können (zum Vgl.: Norm-Leseentfernung entspricht - 2.63D). Alle RMS-Werte der Gesamtabweichung und Fehlsichtigkeiten oben sind somit in der Ausgestaltung für die Korrektur einer Fehlsichtigkeit in der Ferne auch auf die Ferne (unendlich) bezogen.

Die zuvor genannten Vorteile eines Brillenglases der mit dem erfindungsgemäßen Verfahren entworfenen Familie von Brillengläsern kommen insbesondere im Falle von Einstärken-Brillengläser zum Tragen, da diese typischerweise unter Verwendung von Vorderformschalen für die Brillenglasvorderfläche und von Rückformschalen für die Brillenglasrückfläche abgegossen werden. Die Erfindung ermöglicht es, die Anzahl der für eine Familie von Einstärken-Brillengläsern vorzuhaltenden Vorderformschalen und Rückformschalen gering zu halten.

In einer der mit dem erfindungsgemäßen Verfahren entworfenen Familie von Brillengläsern ist jeweils ein Brillenglas zum Erzielen einer bestimmten rezeptgemäßen sphärischen Wirkung, die auch null sein kann, aus einer Anzahl von rezeptgemäßen sphärischen Wirkungen und einer bestimmten rezeptgemäßen astigmatischen Wirkung, die auch null sein kann, aus einer Anzahl von rezeptgemäßen astigmatischen Wirkungen vorhanden. Jedes Brillenglas weist eine bestimmte rotationssymmetrische Brillenglasvorderfläche, also eine bestimmte sphärische oder rotationssymmetrische asphärische Brillenglasvorderfläche, sowie eine bestimmte atorische Brillenglasrückfläche auf.

Bei jedem Brillenglas der Familie, zumindest aber bei jedem Brillenglas der Familie von Brillengläsern, welches eine echte atorische Brillenglasrückfläche besitzt, liegt in wenigstens einem Hauptschnitt eine derartige Abweichung des Krümmungsverlaufs von der Kreisform vor, dass bei einem Wert für den Abstand zwischen dem Scheitel der Brillenglasrückfläche und dem Augendrehpunkt, der in einem Bereich liegt, welcher sich von 15 mm bis 40 mm erstreckt und sich insbesondere von 20 bis 30 mm erstrecken kann, an jedem Punkt eines innerhalb eines Radius von 25 mm um die geometrische Brillenglasmitte gelegenen Brillenglasbereiches eine obere Grenze der Gesamtabweichung RMS = Sqrt(SphAbw$^2$ + (astAbw/2)$^2$) der Wirkung nicht überschritten wird, wobei die obere Grenze der Gesamtabweichung durch

$$0{,}25D - MIN[(0{,}05*Sph - 0{,}1*|Zyl|);0]$$

gegeben ist und wobei

Sph den Wert "Sphäre" der rezeptgemäßen sphärischen Wirkung,

Zyl den Wert "Zylinder" der rezeptgemäßen astigmatischen Wirkung, der den Wer Null oder einen negativen Wert annehmen kann, insbesondere einen Wert aus dem Intervall [0D, -3D],

|Zyl| den Betrag des "Zylinder"-Werts,

sphAbw die Abweichung der rezeptgemäßen sphärischen Wirkung des Brillenglases von der mit ihm tatsächlich erzielten sphärischen Wirkung,

astAbw die Abweichung der rezeptgemäßen astigmatischen Wirkung des Brillenglases von der mit ihm tatsächlich erzielten astigmatischen Wirkung und

MIN die Minimumfunktion

bezeichnen. Mit anderen Worten, im gesamten innerhalb des Radius von 25 mm um die geometrische Brillenglasmitte gelegenen Brillenglasbereiches gilt für die Gesamtabweichung

$$RMS \leq 0{,}25D - MIN[(0{,}05*Sph - 0{,}1*|Zyl|);0]$$

und vorzugsweise sogar

$$RMS \leq 0{,}18D - MIN[(0{,}045*Sph - 0{,}09*|Zyl|);0].$$

In der Familie von Brillengläsern können Werte für sphAbw, die kleiner als Null sind, in der Gleichung RMS = Sqrt(SphAbw$^2$ + (astAbw/2)$^2$) gleich Null gesetzt sein, wie mit Bezug auf das Brillenglas der mit dem erfindungsgemäßen Verfahren entworfenen Familie von Brillengläsern bereits erläutert worden ist.

Wie bereits mit Bezug auf das Brillenglas der mit dem erfindungsgemäßen Verfahren entworfenen Familie von Brillengläsern beschrieben worden ist, ermöglicht es die vorliegende Erfindung, die gesamte Familie von Brillengläsern unter Verwendung relativ weniger Brillenglasvorderflächen und Brillenglasrückflächen zu erzeugen. Dies ermöglicht es, im Falle mit Hilfe von Vorderformschalen und Rückformschalen abgegossenen Einstärken-Brillengläsern die Zahl der vorzuhaltenden Formschalen gering zu halten, weil die Familie von Brillengläsern Brillengläser umfassen kann, welche jeweils dieselbe atorische Brillenglasrückfläche aber jeweils unterschiedliche sphärische oder rotationssymmetrische asphärische Brillenglasvorderflächen aufweisen. Andererseits kann eine sphärische oder rotationssymmetrische asphärische Brillenglasvorderfläche jeweils auch mit mehreren atorischen Brillenglasrückflächen kombiniert werden. Insbesondere sind hierbei in der Familie von Brillengläsern

- Gruppen von rotationssymmetrischen Brillenglasvorderflächen vorhanden, wobei jede Gruppe von rotationssymmetrischen Brillenglasvorderflächen eine Anzahl unterschiedlicher rotationssymmetrischer Brillenglasvorderflächen enthält,

- Gruppen von atorischen Brillenglasrückflächen vorhanden, wobei jede Gruppe von atorischen Brillenglasrückflächen eine Anzahl von atorischen Brillenglasrückflächen enthält und wobei jede Gruppe von atorischen Brillenglasrückflächen einer Gruppe von rotationssymmetrischen Brillenglasvorderflächen zugeordnet ist, und

- Jede Kombination einer atorischen Brillenglasrückfläche aus einer Gruppe von atorischen Brillenglasrückflächen mit einer rotationssymmetrischen Brillenglasvorderfläche aus der zugeordneten Gruppe von rotationssymmetrischen Brillenglasvorderflächen ein Brillenglas der Familie von Brillengläsern repräsentiert.

Durch diese gruppenweise Zuordnung kann eine Sortierung der Brillenglasvorderflächen und Brillenglasrückflächen realisiert werden, die eine rasche Zuordnung der atorischen Brillenglasrückflächen zu geeigneten rotationssymmetrischen Brillenglasvorderflächen, d. h. zu geeigneten sphärischen oder rotationssymmetrischen asphärischen Brillenglasvorderflächen ermöglicht.

Die Familie von Brillengläsern kann insbesondere eine Familie von Einstärken-Brillengläsern sein. Bei Einstärken-Brillengläsern kommen die Vorteile der mit dem erfindungsgemäßen Verfahren entworfenen Familie von Brillengläsern besonders zum Tragen, da die Einstärken-Brillengläser durch Abgießen unter Verwendung einer Anzahl von miteinander zu kombinierenden Vorderflächenformschalen zum Formen der Brillenglasvorderflächen und Rückflächenformschalen zum Formen der Brillenglasrückflächen abgegossen werden. In der Familie von Brillengläsern kann die Anzahl dieser Formschalen gering gehalten werden. Wenn zudem die beschriebenen Gruppen von rotationssymmetrischen Brillenglasvorderflächen, die beschrieben Gruppen von atorischen Brillenglasrückflächen sowie die beschriebene Zuordnung der Gruppen von atorischen Brillenglasrückflächen zu den Gruppen von rotationssymmetrischen Brillenglasvorderflächen vorhanden sind, können zudem rasch diejenigen Vorderformflächen und Rückformflächen aufgefunden werden, die miteinander zu kombinieren sind.

Im erfindungsgemäßen computerimplementierten Verfahren zum Entwurf einer Familie von Brillengläsern werden eine Anzahl von rezeptgemäßen sphärischen Wirkungen und eine Anzahl von rezeptgemäßen astigmatischen Wirkungen vorgegeben, und für jede Kombination einer bestimmten sphärischen Wirkung aus der Anzahl an rezeptgemäßen sphärischen Wirkungen mit einer bestimmten astigmatischen Wirkung aus der Anzahl von rezeptgemäßen astigmatischen Wirkungen wird jeweils ein Brillenglas mit einer rotationssymmetrischen Brillenglasvorderfläche, d. h. mit einer sphärischen oder rotationssymmetrischen asphärischen Brillenglasvorderfläche, und einer atorischen Brillenglasrückfläche ermittelt. Erfindungsgemäß wird für jede der atorischen Brillenglasrückflächen die Abweichung des Krümmungsverlaufs der jeweiligen atorischen Brillenglasrückflächen von der Kreisform in dem wenigstens einen Hauptschnitt für einen Wert des Abstandes zwischen dem Scheitel der Brillenglasrückfläche und dem Augendrehpunkt, der in einem Bereich liegt, welcher sich von 15 mm bis 40 mm erstreckt und sich insbesondere von 20 mm bis 30 mm erstrecken kann, derart ermittelt, dass bei einem dem Wert entsprechenden Abstand zwischen dem Scheitel der Brillenglasrückfläche und dem Augendrehpunkt an jedem Punkt eines innerhalb eines Radius von 25 mm um die geometrische Brillenglasmitte gelegenen Brillenglasbereiches eine obere Grenze der Gesamtabweichung RMS = Sqrt($SphAbw^2$ + $(astAbw/2)^2$) der Wirkung nicht überschritten wird, wobei die obere Grenze der Gesamtabweichung durch

$$0{,}25D - MIN[(0{,}05*Sph - 0{,}1*|Zyl|);0]$$

gegeben ist und wobei

Sph den Wert "Sphäre" der rezeptgemäßen sphärischen Wirkung,

|Zyl| den Betrag des "Zylinder"-Werts,

Zyl den Wert "Zylinder" der rezeptgemäßen astigmatischen Wirkung, der den Wer Null oder einen negativen Wert annehmen kann, insbesondere einen Wert aus dem Intervall [0D, -3D],

sphAbw die Abweichung der rezeptgemäßen sphärischen Wirkung des Brillenglases von der mit ihm tatsächlich erzielten sphärischen Wirkung,

astAbw die Abweichung der rezeptgemäßen astigmatischen Wirkung des Brillenglases von der mit ihm tatsächlich erzielten astigmatischen Wirkung und

MIN die Minimumfunktion

bezeichnen. Mit anderen Worten, im gesamten innerhalb des Radius von 25 mm um die geometrische Brillenglasmitte gelegenen Brillenglasbereiches gilt für die Gesamtabweichung _

$$RMS \leq 0{,}25D - MIN[(0{,}05*Sph - 0{,}1*|Zyl|);0]$$

und vorzugsweise sogar

$$RMS \leq 0{,}18D - MIN[(0{,}045*Sph - 0{,}09*|Zyl|);0].$$

Die mit dem erfindungsgemäßen computerimplementierten Verfahren zum Entwurf einer Familie von Brillengläsern zu entwerfenden Brillengläser können insbesondere Brillengläser sein, die als atorische Brillenglasrückflächen echte atorische Brillenglasrückflächen aufweisen.

Im erfindungsgemäßen computerimplementierten Verfahren können Werte für sphAbw, die kleiner als Null sind, in der Gleichung RMS = Sqrt($SphAbw^2$ + $(astAbw/2)^2$) gleich Null gesetzt werden, wie mit Bezug auf das erfindungsgemäße Brillenglas bereits erläutert worden ist.

Das erfindungsgemäße computerimplementierte Verfahren ermöglicht es, eine erfindungsgemäße Familie von Brillengläsern zu entwerfen, und damit eine Familie von Brillengläsern, welche die zuvor beschriebenen erfindungsgemäßen Vorteile verwirklicht.

Ein erfindungsgemäßes nicht flüchtiges computerlesbares Speichermedium weist darauf gespeicherte Instruktionen zum Entwurf einer Familie von Brillengläsern auf, wobei die Instruktionen, wenn sie auf einen Computer ausgeführt werden, den Computer dazu veranlassen:

- Eine Anzahl von rezeptgemäßen sphärischen Wirkungen und eine Anzahl von rezeptgemäßen astigmatischen Wirkungen vorzugeben oder zu erfassen und

- für jede Kombination einer bestimmten sphärischen Wirkung aus der Anzahl an rezeptgemäßen sphärischen Wirkungen mit einer bestimmten astigmatischen Wirkung aus der Anzahl von rezeptgemäßen astigmatischen Wirkungen jeweils ein Brillenglas mit einer rotationssymmetrischen Brillenglasvorderfläche, also einer sphärischen oder rotationssymmetrischen asphärischen Brillenglasvorderfläche, und einer atorischen Brillenglasrückfläche zu ermitteln.

Erfindungsgemäß umfasst das Speichermedium außerdem darauf gespeicherte Instruktionen, die, wenn sie auf einem Computer ausgeführt werden, den Computer unter anderem dazu veranlassen, für jede der atorischen Brillenglasrückflächen die Abweichung des Krümmungsverlaufes der jeweiligen atorischen Brillenglasrückfläche von der Kreisform in dem wenigstens einen Hauptschnitt für einen Wert des Abstandes zwischen dem Scheitel der Brillenglasrückfläche und dem Augendrehpunkt, der in einem Bereich liegt, welcher sich von 15 mm bis 40 mm erstreckt und sich insbesondere von 20 mm bis 30 mm erstrecken kann, derart zu ermitteln, dass bei einem dem Wert entsprechenden Abstand zwischen dem Scheitel der Brillenglasrückfläche und dem Augendrehpunkt an jedem Punkt eines innerhalb eines Radius von 25 mm um die geometrische Brillenglasmitte gelegenen Brillenglasbereiches eine obere Grenze der Gesamtabweichung RMS = Sqrt($SphAbw^2$ + $(astAbw/2)^2$) der Wirkung nicht überschritten wird, wobei die obere Grenze der Gesamtabweichung durch

$$0{,}25D - MIN[(0{,}05*Sph - 0{,}1*|Zyl|);0]$$

gegeben ist und wobei

Sph den Wert "Sphäre" der rezeptgemäßen sphärischen Wirkung,

Zyl den Wert "Zylinder" der rezeptgemäßen astigmatischen Wirkung, der den Wer Null oder einen negativen Wert annehmen kann, insbesondere einen Wert aus dem Intervall [0D, -3D],

|Zyl| den Betrag des "Zylinder"-Werts,

sphAbw die Abweichung der rezeptgemäßen sphärischen Wirkung des Brillenglases von der mit ihm tatsächlich erzielten sphärischen Wirkung,

astAbw die Abweichung der rezeptgemäßen astigmatischen Wirkung des Brillenglases von der mit ihm tatsächlich erzielten astigmatischen Wirkung und

MIN die Minimumfunktion bezeichnen. Mit anderen Worten, im gesamten innerhalb des Radius von 25 mm um die geometrische Brillenglasmitte gelegenen Brillenglasbereiches gilt für die Gesamtabweichung _

$$RMS \leq 0{,}25D - MIN[(0{,}05*Sph - 0{,}1*|Zyl|);0]$$

und vorzugsweise sogar

$$RMS \leq 0{,}18D - MIN[(0{,}045*Sph - 0{,}09*|Zyl|);0].$$

Die auf dem Speichermedium gespeicherten Instruktionen können insbesondere dazu ausgelegt sein, den Computer zum Entwurf solcher Brillengläser einer Familie von Brillengläsern, die als atorische Brillenglasrückflächen echte atorische Brillenglasrückflächen aufweisen, zu veranlassen.

Im erfindungsgemäßen nicht flüchtigen computerlesbaren Speichermedium können Werte für sphAbw, die kleiner als Null sind, in der Gleichung RMS = Sqrt($SphAbw^2$ + $(astAbw/2)^2$) gleich Null gesetzt werden, wie mit Bezug auf das erfindungsgemäße Brillenglas bereits erläutert worden ist. Das erfindungsgemäße nicht flüchtige computerlesbare speichermedium ermöglicht die Ausführung des computerimplementierte Verfahrens zum Entwurf einer Familien von Brillengläsern auf einem Computer und somit die Realisierung einer Familie von Brillengläsern mit den zuvor beschriebenen Vorteilen.

Im erfindungsgemäßen Verfahren zum Herstellen eines Brillenglases werden eine rezeptgemäße sphärische Wirkung und eine rezeptgemäße astigmatisch Wirkung vorgegeben. Für die Kombination aus der vorgegebenen rezeptgemäßen sphärischen Wirkung und der vorgegebenen rezeptgemäßen astigmatischen Wirkung werden eine rotationssymmetrische Brillenglasvorderfläche, also eine sphärische oder rotationssymmetrische asphärische Brillenglasvorderfläche, aus einer Anzahl unterschiedlicher vorgegebener rotationssymmetrischer Brillenglasvorderflächen und eine atorische Brillenglasrückfläche aus einer Anzahl unterschiedlicher vorgegebener atorischer Brillenglasrückflächen ausgewählt. Das Brillenglas wird dann mit der ausgewählten rotationssymmetrischen Brillenglasvorderfläche und der ausgewählten atorischen Brillenglasrückfläche geformt.

Erfindungsgemäß ist bei jeder der atorischen Brillenglasrückflächen aus der Anzahl unterschiedlicher vorgegebener atorischer Brillenglasrückflächen die Abweichung des Krümmungsverlaufs der jeweiligen atorischen Brillenglasrückfläche von der Kreisform in wenigstens einem Hauptschnitt derart ausgebildet ist, dass bei einem Wert für den Abstand zwischen dem Scheitel der Brillenglasrückfläche und dem Augendrehpunkt, der in einem Bereich liegt, welcher sich von 15 mm bis 40 mm erstreckt und sich insbesondere von 20 bis 30 mm erstrecken kann, an jedem Punkt eines innerhalb eines Radius von 25 mm um die geometrische Brillenglasmitte gelegenen Brillenglasbereiches eine obere Grenze der Gesamtabweichung RMS = Sqrt($SphAbw^2$ + $(astAbw/2)^2$) der Wirkung nicht überschritten wird, wobei die obere Grenze der Gesamtabweichung durch

$$0{,}25D - MIN[(0{,}05*Sph - 0{,}1*|Zyl|);0]$$

gegeben ist und wobei

Sph den Wert "Sphäre" der rezeptgemäßen sphärischen Wirkung,

Zyl den Wert "Zylinder" der rezeptgemäßen astigmatischen Wirkung, der den Wer Null oder einen negativen Wert annehmen kann, insbesondere einen Wert aus dem Intervall [0D, -3D],

|Zyl| den Betrag des "Zylinder"-Werts,

sphAbw die Abweichung der rezeptgemäßen sphärischen Wirkung des Brillenglases von der mit ihm tatsächlich erzielten sphärischen Wirkung,

astAbw die Abweichung der rezeptgemäßen astigmatischen Wirkung des Brillenglases von der mit ihm tatsächlich erzielten astigmatischen Wirkung und

MIN die Minimumfunktion

bezeichnen. Mit anderen Worten, im gesamten innerhalb des Radius von 25 mm um die geometrische Brillenglasmitte gelegenen Brillenglasbereiches gilt für die Gesamtabweichung _

$$RMS \leq 0{,}25D - MIN[(0{,}05*Sph - 0{,}1*|Zyl|);0]$$

und vorzugsweise sogar

$$RMS \leq 0{,}18D - MIN[(0{,}045*Sph - 0{,}09*|Zyl|);0].$$

Mit dem erfindungsgemäßen Verfahren zum Herstellen eines Brillenglases können insbesondere solche Brillengläser hergestellt werden, die als atorische Brillenglasrückfläche eine echte atorische Brillenglasrückfläche aufweisen.

Im erfindungsgemäßen Verfahren zum Herstellen eines Brillenglases können Werte für sphAbw, die kleiner als Null sind, in der Gleichung $RMS = Sqrt(SphAbw^2 + (astAbw/2)^2)$ gleich Null gesetzt werden, wie mit Bezug auf das erfindungsgemäße Brillenglas bereits erläutert worden ist.

Das erfindungsgemäße Verfahren ermöglicht das Herstellen eines Brillenglases der mit dem erfindungsgemäßen Verfahren entworfenen Familie von Brillengläsern und ermöglicht somit die Herstellung eines Brillenglases, welches die mit Bezug auf das Brillenglas der mit dem erfindungsgemäßen Verfahren entworfenen Familie von Brillengläsern beschriebene Eigenschaften und Vorteile aufweist.

In einer ersten Variante des erfindungsgemäßen Verfahrens zum Herstellen eines Brillenglases erfolgt das Formen wenigstens einer der Brillenglasflächen durch Abgießen. Insbesondere kann das gesamte Formen des Brillenglases durch Abgießen erfolgen. In dieser Variante sind die Brillenglasvorderflächen aus der Anzahl unterschiedlicher vorgegebener rotationssymmetrischer Brillenglasvorderflächen jeweils durch eine Vorderflächenformschale mit einer Formfläche zum Formen der jeweiligen Brillenglasvorderfläche gegeben. Zusätzlich oder alternativ sind die Brillenglasrückflächen aus der Anzahl unterschiedlicher vorgegebener atorischer Brillenglasrückflächen jeweils durch eine Rückflächenformschale mit einer Formfläche zum Formen der jeweiligen Brillenglasrückfläche gegeben. Das Formen des Brillenglases durch Abgießen ist eine kostengünstige und mit wenig Zeitaufwand durchzuführende Herstellungsmethode für Brillengläser aus einem organischen Glasmaterial.

In einer zweiten Variante des erfindungsgemäßen Verfahrens zum Herstellen eines Brillenglases erfolgt das Formen wenigstens einer der Brillenglasflächen durch Schleifen. Insbesondere kann das gesamte Formen des Brillenglases durch Schleifen erfolgen. Die Brillenglasvorderflächen aus der Anzahl unterschiedlicher vorgegebener rotationssymmetrischer Brillenglasvorderflächen sind in dieser Variante jeweils durch einen Vorderflächenschleifdatensatz zum Schleifen der jeweiligen Brillenglasvorderfläche gegeben. Zusätzlich oder alternativ sind die Brillenglasrückflächen aus der Anzahl unterschiedlicher vorgegebener atorischer Brillenglasrückflächen jeweils durch einen Rückflächenschleifdatensatz zum Schleifen der jeweiligen Brillenglasrückfläche gegeben. Das Schleifen ermöglicht das Herstellen eines Brillenglases der mit dem erfindungsgemäßen Verfahren entworfenen Familie von Brillengläsern.

Es besteht auch die Möglichkeit, beide Varianten zu kombinieren und eine der Brillenglasflächen durch Abgießen zu formen, wohingegen die andere Brillenglasfläche durch Schleifen geformt wird.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.

Figur 1 zeigt anhand eines Ablaufdiagramms ein Beispiel für das Entwerfen einer Familie von Brillengläsern.

Figur 2 zeigt die Flächenbrechkraft der Vorderflächen der Brillengläser einer Familie von Brillengläsern für einen Bereich an sphärischen Wirkungen der Brillengläser.

Figur 3 zeigt für die Familie von Brillengläsern aus Figur 2 die Flächenbrechkräfte der Brillenglasrückflächen in den Hauptschnitten.

Figur 4 zeigt in einem Ablaufdiagramm ein Ausführungsbeispiel für das Herstellen eines Brillenglases der Familie von Brillengläsern.

Im Rahmen der vorliegenden Beschreibung finden die folgenden Definitionen Verwendung:

Dioptrische Wirkung, sphärische Wirkung und astigmatische Wirkung

Brillengläser weisen wenigstens eine dioptrische Wirkung auf, wobei der Begriff "dioptrische Wirkung" ein Sammelbegriff für die fokussierende Wirkung und die prismatische Wirkung (DIN ISO 13666:2013-10, Abschnitt 10.9) ist. Der Begriff "fokussierende Wirkung" ist wiederum ein Sammelbegriff für die sphärische Wirkung, gemäß der ein paraxiales, paralleles Strahlenbündel auf einen Punkt fokussiert wird, und die astigmatische Wirkung des Brillenglases, gemäß der ein paraxiales, paralleles Strahlenbündel auf zwei zueinander senkrecht verlaufende Linien fokussiert wird. Ein Strahlenbündel soll im Rahmen der vorliegenden Beschreibung als ein paraxiales Strahlenbündel angesehen werden, wenn es einen Durchmesser von 0,05 mm, insbesondere von 0,01 mm nicht überschreitet.

Rezept

Der Begriff "Rezept" bezeichnet eine Zusammenstellung, in der die für die Korrektion einer diagnostizierten Fehlsichtigkeit notwendigen dioptrischen Wirkungen in Form geeigneter Werte angegeben sind. Im Falle einer sphärischen Wirkung kann das Rezept einen Wert "Sph" für Sphäre und im Falle einer astigmatischen Wirkung Werte "Zyl" für Zylinder und "Ach" für Achse enthalten. Das Rezept kann darüber hinaus weitere Werte enthalten.

Rezeptgemäße Wirkung

Die rezeptgemäße Wirkung gibt im Rahmen der vorliegenden Beschreibung die die Soll-Wirkung des Brillenglases beim Blick durch das Brillenglas an, im Falle der rezeptgemäßen sphärischen Wirkung also bspw. den Soll-Wert für die Sphäre beim Blick durch das Brillenglas und im Falle der rezeptgemäßen astigmatischen Wirkung die Soll-Werte für die Zylinder und Achse beim Blick durch das Brillenglas.

Hauptschnitt

Ein Hauptschnitt ist gemäß DIN ISO 13666:2013-10, Abschnitt 7.4 diejenige Meridianebene einer Fläche mit maximaler oder minimaler gemessener Krümmung dieser Fläche, wobei der Begriff "Meridianebene" gemäß DIN ISO 13666:2013-10, Abschnitt 5.7.1 eine Ebene bezeichnet, die den oder die Krümmungsmittelpunkt(e) einer Fläche beinhaltet.

asphärisches Brillenglas

Unter dem Begriff "asphärisches Brillenglas" ist ein Brillenglas mit einer asphärischen Fläche zu verstehen, wobei eine asphärische Fläche ein Teil einer Rotationsfläche ist, deren Krümmung sich vom Scheitelpunkt zur Peripherie hin ändert (DIN ISO 13666:2013-10, Abschnitt 7.3). Eine sphärische Fläche ist dagegen Teil einer Innen- oder Außenfläche einer Kugel (DIN ISO 13666:2013-10, Abschnitt 7.1)

atorisches Brillenglas

Unter dem Begriff "atorisches Brillenglas" ist ein Brillenglas mit einer atorischen Fläche zu verstehen, wobei eine atorische Fläche eine Fläche ist, die zwei zueinander senkrechte Hauptschnitte unterschiedlicher Krümmung besitzt und bei der der Querschnitt in mindestens einem der Hauptschnitte nicht kreisförmig ist (DIN ISO 13666:2013-10, Abschnitt 7.6). Bei einer torischen Fläche sind dagegen die Querschnitte in beiden Hauptschnitten nominell kreisförmig (DIN ISO 13666:2013-10, Abschnitt 7.5). Wenn sich bei einer atorischen Fläche die Krümmungsradien und die nicht kreisförmigen Querschnitte in beiden Hauptschnitten einander annähern, erhält mein im Grenzfall gleicher Krümmungsradien und gleicher nicht kreisförmiger Querschnitte in beiden Hauptschnitten eine asphärische Fläche. Eine asphärische Fläche stellt in diesem Sinne eine spezielle Form der atorischen Fläche dar und soll im Rahmen der vorliegenden Erfindung von dem Begriff atorische Fläche mit umfasst sein. Eine Fläche in der sich die Krümmungsradien in beiden Hauptschnitten voneinander unterscheiden und in der der Querschnitt in mindestens einem der Hauptschnitte von der Kreisform abweicht, wird im Rahmen der vorliegenden Beschreibung als echte atorische Fläche bezeichnet.

Familie von Brillengläsern

Unter einer Familie von Brillengläsern soll im Rahmen der vorliegenden Beschreibung eine Menge von Brillengläsern zu verstehen sein, die einerseits alle durch denselben Parametersatz charakterisiert sind und sich durch den Parameterwert wenigstens eines Parameters des Parametersatzes voneinander unterscheiden, und andererseits alle mit Hilfe desselben Herstellungsverfahren herstellbar sind.

Scheitelpunkt

Der Begriff "Scheitelpunkt" bezeichnet den Schnittpunkt der optischen Achse mit einer der beiden Oberflächen eines Brillenglases (DIN ISO 13666:2013-10, Abschnitt 4.9).

Hornhaut-Scheitelabstand

Der Begriff "Hornhaut-Scheitelabstand" bezeichnet den Abstand zwischen der Brillenglasrückfläche und dem Apex der Hornhaut, gemessen in Blickrichtung senkrecht zur Fassungsebene (DIN ISO 13666:2013-10, Abschnitt 5.27). Die Fassungsebene ist dabei die Ebene durch die beiden vertikalen Mittellinien der rechten und der linken Scheibenebene (DIN ISO 13666:2013-10, Abschnitt 17.2), wobei die Scheibenebene eine Ebene ist, die tangential zur Vorderfläche einer in die Brillenfassung eingearbeiteten Demo- oder Stütz-Scheibe in deren geometrischen Scheibenmittelpunkt verläuft.

sphärisches Äquivalent

Der Begriff "sphärisches Äquivalent" bezeichnet eine mittlere sphärische Wirkung eines Brillenglases mit einer sphärischen Wirkung und einer astigmatischen Wirkung, wobei die mittlere sphärische Wirkung sowohl auf der sphärischen Wirkung als auch auf der astigmatischen Wirkung des Brillenglases beruht. Das sphärische Äquivalent wird gemäß der folgenden Gleichung berechnet: Sphärisches Äquivalent = Sphäre + 0,5 x Zylinder.

Augendrehpunkt

Der "Augendrehpunkt" bezeichnet denjenigen fiktiven Punkt im Auge, um den sich das Auge bei Blickbewegungen dreht.

Ein Ausführungsbeispiel für das erfindungsgemäße Verfahren zum Entwerfen einer Familie von Brillengläsern wird nachfolgend mit Bezug auf Figur 1 beschrieben. Das Verfahren ist computerimplementiert, d.h. es wird auf einen Computer ausgeführt. Zu diesem Zweck kann das Verfahren in Form von Instruktionen auf einem computerlesbaren Speichermedium gespeichert sein. Die gespeicherten Instruktionen veranlassen einen Computer, auf dem sie ausgeführt werden, das in Figur 1 dargestellte Verfahren zum Entwurf einer Familie von Brillengläsern auszuführen. Das Speichermedium, auf dem die Instruktionen gespeichert sind, kann jedes geeignete nicht flüchtige computerlesbare Speichermedium sein. Solche umfassen Festplattenlaufwerke, Solid-State Discs (SSD), USB-Sticks, SD-Karten, Speicherplätze in einer Cloud, wobei diese beispielhafte Aufzählung von computerlesbaren Speichermedien nicht abschließend ist.

Im Rahmen des vorliegenden Ausführungsbeispiels für das Verfahren zum Entwurf einer Familie von Gläsern werden eine Anzahl von rezeptgemäßen sphärischen Wirkungen und eine Anzahl rezeptgemäßen astigmatischen Wirkungen vorgegeben. Die Vorgabe kann dabei entweder von extern erfolgen, d.h. die Anzahl von rezeptgemäßen sphärischen Wirkungen und die Anzahl von rezeptgemäßen astigmatischen Wirkungen wird in den Computer, auf dem das Verfahren ausgeführt wird, eingegeben. Alternativ kann das Vorgeben der Anzahl an rezeptgemäßen sphärischen Wirkungen und der Anzahl von rezeptgemäßen astigmatischen Wirkungen auch intern erfolgen, d.h. der Computer ermittelt auf der Basis von Vorgaben für diese Vorgaben rezeptgemäße sphärische Wirkungen sowie geeignete rezeptgemäße astigmatische Wirkungen. Die Vorgaben können beispielsweise das untere Ende und das obere Ende eines Bereichs von rezeptgemäßen Wirkungen sein.

Im vorliegenden Ausführungsbeispiel werden eine Anzahl von rezeptgemäßen sphärischen Wirkungen zur Korrektion von Fehlsichtigkeiten in der Ferne und eine Anzahl von rezeptgemäßen astigmatischen Wirkungen für Einstärken-Brillengläser vorgegeben (Schritt S1). Im nächsten Schritt des Verfahrens, in Schritt S2, wird für jede Kombination einer bestimmten sphärischen Wirkung aus der Anzahl von rezeptgemäßem sphärischen Wirkungen und einer bestimmten astigmatischen Wirkung aus der Anzahl von rezeptgemäßen astigmatischen Wirkungen jeweils ein Brillenglas mit einer rotationssymmetrischen Brillenglasvorderfläche und einer atorischen Brillenglasrückfläche ermittelt. Im vorliegenden Ausführungsbeispiel ist die rotationssymmetrische Brillenglasvorderfläche eine asphärische rotationssymmetrische Fläche. Die Familie von Brillengläsern ist dann durch eine Anzahl von Kombinationen aus asphärischen rotationssymmetrischen Brillenglasvorderflächen mit atorischen Brillenglasrückflächen gegeben. In alternativen Ausführungsformen des Verfahrens können statt der asphärischen rotationssymmetrischen Brillenglasvorderflächen rein sphärische Brillenglasvorderflächen Verwendung finden. Die Familie von Brillengläsern kann insbesondere Brillengläser für rezeptgemäße Werte Zyl im Intervall [0;-3D] in 0.25D-Schritten und für rezeptgemäße Werte für Sph im Intervall [+6D;-8D] in 0.25D-Schritten beinhalten.

Jede der atorischen Brillenglasrückflächen weist zwei Hauptschnitte auf. Für jede der atorischen Rückflächen wird für einen Wert a des Abstandes zwischen dem Scheitel der Brillenglasrückfläche und dem Augendrehpunkt, der gemäß der Gleichung $a = HSA + (13{,}5 - 0{,}2 \times S_{ä})$ berechnet wird, wobei HSA für den Hornhaut-Scheitelabstand und

$S_ä$ für das sphärische Äquivalent stehen, jeweils die Abweichung des Krümmungsverlaufs von der Kreisform in wenigstens einem Hauptschnitt derart ermittelt, dass bei dem ermittelten Wert a für den Abstand zwischen der dem Scheitel der Brillenglasrückfläche und dem Augendrehpunkt an jedem Punkt eines innerhalb eines Radius von 25 mm um die geometrische Brillenglasmitte gelegenen Brillenglasbereiches eine obere Grenze der Gesamtabweichung RMS = $Sqrt(SphAbw^2 + (astAbw/2)^2)$ der Wirkung nicht überschritten wird. In der Gleichung für die Gesamtabweichung stehen sphAbw für die Abweichung der rezeptgemäßen sphärischen Wirkung des Brillenglases von der mit ihm tatsächlich erzielten sphärischen Wirkung und astAbw für die Abweichung der rezeptgemäßen astigmatischen Wirkung des Brillenglases von der mit ihm tatsächlich erzielten astigmatischen Wirkung. Falls ein Wert für sphAbw kleiner als Null ist, wird dieser im vorliegenden Ausführungsbeispiel in der Gleichung RMS = $Sqrt(SphAbw^2 + (astAbw/2)^2)$ gleich Null gesetzt, weil negative Abweichungen der rezeptgemäßen sphärischen Wirkung des Brillenglases von der mit ihm tatsächlich erzielten sphärischen Wirkung, soweit sie einen gewissen Betrag nicht überschreiten, vom Brillenträger akkommodiert werden können, und somit nicht zum Bildfehler des Brillenglases beitragen..

Die obere Grenze der Gesamtabweichung ist im vorliegenden Ausführungsbeispiel durch die Gleichung

$$RMS \leq 0{,}18D - MIN[(0{,}045*Sph - 0{,}09*|Zyl|);0].$$

festgelegt, wobei Sph den Wert "Sphäre" der rezeptgemäßen sphärischen Wirkung, Zyl den Wert "Zylinder" der rezeptgemäßen astigmatischen Wirkung, der im vorliegenden Ausführungsbeispiel einen Wert aus dem Intervall [0D, -3D] annehmen kann, und MIN die Minimumfunktion bezeichnen. Die folgende Tabelle zeigt die durch die obige Gleichung festgelegten Wert der oberen Grenze, die von der Gesamtabweichung RMS der Wirkung nicht überschritten wird, exemplarisch für den Lieferbereich einer Familie von Brillengläsern mit rezeptgemäßen sphärischen Wirkungen im Bereich von Sph = -8D bis Sph = +6D und Zylinderwerten der rezeptgemäßen astigmatischen Wirkung im Bereich von zyl = 0D bis Zyl = - 3D.

| **Sph\Zyl** | **0** | **-1** | **-2** | **-3** |
|---|---|---|---|---|
| **-8** | 0,540 | | | |
| **-7** | 0,495 | 0,585 | | |
| **-6** | 0,450 | 0,540 | 0,630 | |
| **-5** | 0,405 | 0,495 | 0,585 | 0,675 |
| **-4** | 0,360 | 0,450 | 0,540 | 0,630 |
| **-3** | 0,315 | 0,405 | 0,495 | 0,585 |
| **-2** | 0,270 | 0,360 | 0,450 | 0,540 |
| **-1** | 0,225 | 0,315 | 0,405 | 0,495 |
| **0** | 0,180 | 0,270 | 0,360 | 0,450 |
| **1** | 0,180 | 0,225 | 0,315 | 0,405 |
| **2** | 0,180 | 0,180 | 0,270 | 0,360 |
| **3** | 0,180 | 0,180 | 0,225 | 0,315 |
| **4** | 0,180 | 0,180 | 0,180 | 0,270 |
| **5** | 0,180 | 0,180 | 0,180 | 0,225 |
| **6** | 0,180 | 0,180 | 0,180 | 0,180 |

Die Tabelle zeigt, dass für jedes Brillenglas der Familie von Brillengläsern die Gesamtabweichung RMS der Wirkung gering ist, insbesondere auch bei den Brillengläsern mit echten atorischen Brillenglasrückflächen - und unter diesen vor allem bei den Brillengläsern mit hohen rezeptgemäßen Werten für Zyl. Mit einer Asphärisierung der Brillenglasvorderfläche, wie sie aus dem Stand der Technik bekannt ist, ist die Gesamtabweichung RMS der Wirkung der Brillengläser höher als mit den atorischen Brillenglasrückflächen gemäß der vorliegenden Erfindung, insbesondere bei hohen rezeptgemäßen Werten für Zyl. Trotzdem benötigt man für die Herstellung der Brillenglasfamilie durch Abformen nicht mehr Formschalen als im Stand der Technik.

Im vorliegenden Ausführungsbeispiel findet für den Hornhaut-Scheitelabstand HSA ein Wert von 12 mm Verwendung. In alternativen Ausführungsformen können jedoch auch andere Werte für den Hornhaut-Scheitelabstand Verwendung finden, bspw. Werte im Bereich zwischen 10 mm und 15 mm. Es ist dabei grundsätzliche auch möglich, für die rotationssymmetrische Brillenglasvorderfläche und die atorische Brillenglasrückfläche unterschiedliche Hornhaut-Scheitelabstände zu verwenden.

Mit den in der Tabelle angegebenen Werten für Sph und Zyl liegt der gemäß der Gleichung a = HSA + (13,5 - 0,2 × $S_ä$) für einen Hornhaut-Scheitelabstand von 12 mm berechnete Wert a des Abstandes zwischen dem Scheitel der Brillenglasrückfläche und dem Augendrehpunkt zwischen 24,3 mm und 27,1 mm. Falls für den Hornhaut-Scheitelabstand HSA ein Wert von 10 mm statt 12 mm Verwendung findet, liegt der berechnete Wert a des Abstandes zwischen dem Scheitel der Brillenglasrückfläche und dem Augendrehpunkt zwischen 22,3 mm und 25,1 mm, und falls für den Hornhaut-Scheitelabstand HSA ein Wert von 14 mm Verwendung findet, liegt der berechnete Wert a des Abstandes zwischen der dem Scheitel der Brillenglasrückfläche und dem Augendrehpunkt zwischen 26,3 mm und 29,1 mm. Für andere Hornhaut-Scheitelabstände HSA ergeben sich entsprechen andere Bereiche, in denen der Wert a des Abstandes zwischen der dem Scheitel der Brillenglasrückfläche und dem Augendrehpunkt liegt.

Im nächsten Schritt des Verfahrens, in Schritt S3, erfolgt eine Einteilung der ermittelten asphärischen rotationssymmetrischen Brillenglasvorderflächen in Gruppen von asphärischen rotationssymmetrischen Brillenglasvorderflächen, wobei die Gruppen von asphärischen rotationssymmetrischen Brillenglasvorderflächen gemeinsam eine Menge an sich voneinander unterscheidenden asphärischen rotationssymmetrischen Brillenglasvorderflächen beinhalten. Jede Gruppe von asphärischen rotationssymmetrischen Brillenglasvorderflächen beinhaltet dabei jeweils eine disjunkte Untermenge der Menge an asphärischen rotationssymmetrischen Brillenglasvorderflächen. Im vorliegenden Ausführungsbeispiel umfassen die Gruppen von asphärischen rotationssymmetrischen Brillenglasvorderflächen jeweils vier oder fünf asphärische rotationssymmetrische Brillenglasvorderflächen, die jeweils unterschiedlichen rezeptgemäßen sphärischen Wirkungen der Brillengläser aus der Familie von Brillengläsern zugeordnet sind. Man Begrenzt die Anzahl an Brillenglasvorderflächen einer Gruppe typischerweise auf vier rezeptgemäße sphärische Wirkungen (also z. B. von Sph = -1.25D bis Sph = -2.0D), weil über einen solchen Bereich der Schrumpf ähnlich ist. Über Bereich von vier rezeptgemäßen sphärischen Wirkungen hinaus muss man dann einen anderen Korrekturfaktor für den Schrumpf vorhalten. Im vorliegenden Ausführungsbeispiel enthält lediglich diejenige Gruppe, die die rezeptgemäße sphärische Wirkung mit dem Sph = 0 enthält, Brillenglasvorderflächen für fünf rezeptgemäße sphärische Wirkungen.

Darüber hinaus erfolgt in Schritt S3 auch eine Einteilung der atorischen Brillenglasrückflächen in Gruppen von atorischen Brillenglasrückflächen, wobei die Gruppen von atorischen Brillenglasrückflächen gemeinsam eine Menge an atorischen Brillenglasrückflächen bilden. Jede Gruppe von atorischen Brillenglasrückflächen beinhaltet eine disjunkte Untermenge der Menge an atorischen Brillenglasrückflächen. Im vorliegenden Ausführungsbeispiel enthält jede Gruppe von atorischen Brillenglasrückflächen 13 atorische Rückflächen, die jeweils unterschiedlichen rezeptgemäßen astigmatischen Wirkungen der Brillengläser aus der Familie von Brillengläsern zugeordnet sind.

In Schritt S4 erfolgt sodann eine Zuordnung der Gruppen von atorischen Brillenglasrückflächen zu den Gruppen von rezeptgemäßen asphärischen rotationssymmetrischen Brillenglasvorderflächen. Im vorliegenden Ausführungsbeispiel wird dabei jede Gruppe von atorischen Brillenglasrückflächen genau einer Gruppe von asphärischen rotationssymmetrischen Brillenglasvorderflächen zugeordnet.

In Schritt S5 wird die Familie von Brillengläsern dann in Form der Gruppen von asphärischen rotationssymmetrischen Brillenglasvorderflächen, der Gruppen von atorischen Brillenglasrückflächen sowie der Zuordnung der Gruppen von atorischen Brillenglasrückflächen zu den Gruppen von asphärischen rotationssymmetrischen Brillenglasvorderflächen zur Verfügung gestellt.

Ein Beispiel für eine gemäß dem beschriebenen Ausführungsbeispiel entworfene Familie von Brillengläsern aus einem Glas mit einer Brechzahl von 1,67 ist in den Figuren 2 und 3 angegeben. Figur 2 zeigt dabei sechs Gruppen A bis F von asphärischen rotationssymmetrischen Brillenglasvorderflächen, wobei jede Gruppe von asphärischen rotationssymmetrischen Brillenglasvorderflächen außer Gruppe A einen Bereich von rezeptgemäßen sphärischen Wirkungen der Brillengläser von einer Dioptrie in 0,25 Dioptrien-Schritten repräsentiert. Lediglich die Gruppe A repräsentiert einen größeren Bereich von insgesamt einer Dioptrie, da diese Gruppe die Linse mit der rezeptgemäßen sphärischen Wirkung 0 enthält. Für jede Vorderfläche ist in Figur 2 außer der rezeptgemäßen sphärischen Wirkung der Linse, für die sie Anwendung findet, auch die Flächenbrechkraft der Brillenglasvorderfläche in der geometrischen Brillenglasmitte, bezogen auf einen Brechungsindex von 1,53, angegeben. Figur 2 zeigt beispielhaft den Bereich von Sph [0;-6D] und Zyl [0;-2D], für den mit Formschalen im Durchmesser 80 mm abgegossen wird. Bei positiven Werten für die rezeptgemäße sphärische Wirkung und bei negativeren Werten für die rezeptgemäße sphärische Wirkung, d. h. im vorliegenden Ausführungsbeispiel bei rezeptgemäßen sphärischen Wirkungen mit Werten in den Intervallen [6D, 0D] bzw. [-8D, -6D], finden dagegen typischerweise Formschalen mit kleineren Durchmessern Verwendung. Da die nachfolgenden Erläuterungen in analoger Weise für rezeptgemäße sphärische Wirkungen mit Werten in den Intervallen [6D, 0D] bzw. [-8D, -6D] gelten, wird in den Figuren 2 und 3 auf die Darstellung dieser Intervalle verzichtet.

Figur 3 zeigt in der linken Spalte die Bereiche der rezeptgemäßen sphärischen Wirkungen der jeweiligen Gruppen A bis F von asphärischen rotationssymmetrischen Brillenglasvorderflächen. Die übrigen Spalten zeigen die Flächenbrechkräfte der Brillenglasrückflächen der jeweiligen atorischen Brillenglasrückflächen in der geometrischen Brillenglasmitte, die den einzelnen Gruppen A bis F von asphärischen rotationssymmetrischen Brillenglasvorderflächen zugeordnet sind, in Abhängigkeit von dem rezeptgemäßen Wert "Zyl", also dem Zylinderwert der rezeptgemäßen astigmatischen Wirkung. Jeder Gruppe von asphärischen rotationssymmetrischen Brillenglasvorderflächen A bis F ist dabei eine Gruppe von atorischen Brillenglasrückflächen a bis f zugeordnet. Alle Gruppen von atorischen Brillenglasrückflächen a bis f umfassen im vorliegenden Ausführungsbeispiel jeweils 13 unterschiedliche Brillenglasrückflächen, von denen in Figur 3 nur neun dargestellt sind (nämlich diejenigen für rezeptgemäße Zylinderwerte im Intervall [0D, -2D]), um die Tabelle kompakter gestalten zu können. Die dargestellten rezeptgemäßen Zylinderwerte zeigen somit einen Ausschnitt aus den rezeptgemäßen Zylinderwerten des Ausführungsbeispiels, wobei der Ausschnitt den Bereich der Zylinderwerte von 0 bis -2 Dioptrien in 0,25 Dioptrienschritten abdeckt. Jede atorische Rückfläche einer Gruppe von atorischen Rückflächen a bis f weist jeweils in einem Hauptschnitt dieselbe Brechkraft auf, wohingegen sie in dem dazu senkrechten Hauptschnitt unterschiedliche Flächenbrechkräfte besitzt. Die in der Tabelle angegebenen Brechkräfte beziehen sich jeweils auf die Flächenbrechkräfte in der geometrischen Brillenglasmitte und einen Brechungsindex von 1,53. In der ersten Gruppe von atorischen Rückflächen weist die Flächenbrechkraft in dem ersten Hauptschnitt den Wert 3,17 Dioptrien auf, wohingegen die Flächenbrechkraft in dem anderen Hauptschnitt zwischen 3,17 Dioptrien und 4,75 Dioptrien variiert. An dieser Stelle sei angemerkt, dass in dem Falle, dass in beiden Hauptschnitten dieselbe Flächenbrechkraft vorliegt eine asphärische Fläche statt einer atorischen Fläche vorliegt. Dieser Fall entspricht dem Zylinderwert 0,00. In der Spalte für den Zylinderwert 0,00 ist daher lediglich eine einzige Flächenbrechkraft angegeben, die in beiden Hauptschnitten der Brillenglasrückfläche vorliegt.

Wie Figur 3 zu entnehmen ist, ist jede Gruppe von atorischen Rückflächen a bis f einer Gruppe A bis F von asphärischen rotationssymmetrischen Brillenglasvorderflächen zugeordnet, wobei jede atorische Brillenglasrückfläche einer Gruppe a bis f von atorischen Brillenglasrückflächen mit jeder asphärischen rotationssymmetrischen Brillenglasvorderfläche einer Gruppe A bis F von rotationssymmetrischen asphärischen Brillenglasvorderflächen kombiniert werden kann, um ein Brillenglas der Familie von Brillengläsern zu repräsentieren. Aufgrund der Gruppierung der Brillenglasvorderflächen und der Brillenglasrückflächen und der freien Kombinierbarkeit der Brillenglasflächen von einender zugeordneten Gruppen ist die Anzahl an vorzuhaltenden Brillenglasvorderflächen und vorzuhaltenden Brillenglasrückflächen auf ein notwendiges Minimum begrenzt.

Das Herstellen eines Brillenglases der in den Figuren 2 und 3 ausschnittsweise dargestellten Familie von Brillengläsern wird nachfolgend anhand eines Ausführungsbeispiels unter Bezugnahme auf Figur 4 beschrieben. In einem ersten Schritt S11 des Verfahrens erfolgt die Vorgabe einer rezeptgemäßen sphärischen Wirkung und einer rezeptgemäßen astigmatischen Wirkung. Dabei kann entweder die rezeptgemäße sphärische Wirkung oder die rezeptgemäße astigmatische Wirkung auch den Wert null aufweisen. Für die Kombination aus der vorgegebenen rezeptgemäßen sphärischen Wirkung und der vorgegebenen rezeptgemäßen astigmatischen Wirkung wird sodann in Schritt S12 eine asphärische rotationssymmetrische Brillenglasvorderfläche aus derjenigen Gruppen von Brillenglasvorderflächen ausgewählt, welche die rezeptgemäße sphärische Wirkung beinhaltet. Wenn dabei die rezeptgemäße sphärische Wirkung bspw. im Intervall [0D, -6D] liegt, wird die asphärische rotationssymmetrische Brillenglasvorderfläche aus derjenigen Gruppe A bis F von Brillenglasvorderflächen ausgewählt, welche die rezeptgemäße sphärische Wirkung beinhaltet. Außerdem wird in Schritt S12 eine atorische Brillenglasrückfläche ausgewählt. Die atorische Brillenglasrückfläche wird aus der Gruppe von Brillenglasrückflächen ausgewählt, die der Gruppe von Brillenglasvorderflächen, in der sich die ausgewählte asphärische rotationssymmetrische Brillenglasvorderfläche befindet, zugeordnet ist. Wenn die rezeptgemäße sphärische Wirkung im Intervall [0D, -6D] liegt, wird die atorische Brillenglasrückfläche somit aus einer der Gruppen a bis f von Brillenglasrückflächen ausgewählt, nämlich aus derjenigen Gruppe, die der Gruppe A bis F von Brillenglasvorderflächen, in der sich die ausgewählte asphärische rotationssymmetrische Brillenglasvorderfläche befindet, zugeordnet ist. Beispielsweise im Falle einer rezeptgemäßen sphärischen Wirkung von -2,5D liegt die zugehörige Brillenglasvorderfläche in der Gruppe C, so dass die atorische Brillenglasrückfläche für die rezeptgemäße astigmatische Wirkung aus der Gruppe c ausgewählt wird. Das Auswählen der Brillenglasvorderfläche und der Brillenglasrückfläche erfolgt dabei automatisiert auf der Basis der rezeptgemäßen sphärische Wirkung und der rezeptgemäßen astigmatischen Wirkung, die das Brillenglas zur Verfügung stellen soll. In Schritt S13 wird dann ein Brillenglas gefertigt, welches die ausgewählte asphärische rotationssymmetrische Brillenglasvorderfläche und die ausgewählte atorische Brillenglasrückfläche aufweist.

In einer ersten Variante des vorliegenden Ausführungsführungsbeispiels zum Herstellen eines Brillenglases wird das Brillenglas durch Abgießen mit einem organischen Glasmaterial gefertigt. In diesem Fall liegen die Brillenglasvorderflächen und die Brillenglasrückflächen in Form von Vorderflächenformschalen und Rückflächenformschalen vor. Jede Vorderflächenformschale weist dabei eine Formfläche zum Formflächen einer der asphärischen rotationssymmetrischen Brillenglasvorderflächen auf. Entsprechend weist jede Rückflächenformschale eine Formfläche zum Formen einer der atorischen Brillenglasrückflächen auf. Das Auswählen der Brillenglasvorderfläche aus der Anzahl unterschiedlicher vorgegebener asphärischer rotationssymmetrischer Brillenglasvorderflächen erfolgt daher in dieser Variante durch Auswählen der entsprechenden Vorderflächenformschale. Das Auswählen der atorischen Brillenglasrückfläche erfolgt durch Auswählen der entsprechenden Rückflächenformschale. Mit Hilfe der ausgewählten Vorderflächenformschale und der ausgewählten Rückflächenformschale kann dann das Brillenglas beispielsweise mit Hilfe des organischen Glasmaterials abgegossen werden.

In einer zweiten Variante erfolgt die Fertigung des Brillenglases auf der Basis der ausgewählten asphärischen rotationssymmetrischen Brillenglasvorderfläche und der Basis der atorischen Brillenglasrückfläche nicht durch Abgießen, sondern durch Schleifen eines Glaskörpers. Dieses Verfahren eignet sich insbesondere im Falle anorganischer Glasmaterialien, die nicht oder nur mit sehr hohem Aufwand abgegossen werden könnten. Wenn das Fertigen des Brillenglases durch Schleifen erfolgt, sind die asphärischen rotationssymmetrischen Brillenglasvorderflächen jeweils durch einen Vorderflächendatensatz zum Schleifen der entsprechenden Brillenglasvorderfläche gegeben. Die atorischen Brillenglasrückflächen sind dann durch einen Rückflächenschleifdatensatz zum Schleifen der jeweiligen Brillenglasrückfläche gegeben.

Die vorliegende Erfindung wurde zu Erläuterungszwecken anhand von Ausführungsbeispielen im Detail beschrieben. Ein Fachmann erkennt jedoch, dass er von diesen Ausführungsbeispielen abweichen kann. Insbesondere besteht zum Beispiel die Möglichkeit, dass statt wie im vorliegenden Ausführungsbeispiel die strengere Gleichung

$$RMS \leq 0{,}18D - MIN[(0{,}045*Sph - 0{,}09*|Zyl|);0]$$

die weniger strenge Gleichung

$$RMS \leq 0{,}25D - MIN[(0{,}05*Sph - 0{,}1*|Zyl|);0]$$

zur Anwendung kommt, wenn etwas größere Bildfehler der Brillengläser akzeptiert werden können. Ein Fachmann erkennt zudem, dass weitere Abweichungen von den Ausführungsbeispielen möglich sind, ohne von der Erfindung, wie sie in den angehängten Ansprüchen definiert ist, abzuweichen.

## Patentansprüche

1. Computerimplementiertes Verfahren zum Entwurf einer Familie von Brillengläsern, in dem

   - ein eine Anzahl von rezeptgemäßen sphärischen Wirkungen und eine Anzahl von rezeptgemäßen astigmatischen Wirkungen vorgegeben werden, und
   - für jede Kombination einer bestimmten sphärischen Wirkung aus der Anzahl von rezeptgemäßen sphärischen Wirkungen mit einer bestimmten astigmatischen Wirkung aus der Anzahl von rezeptgemäßen astigmatischen Wirkungen jeweils ein Brillenglas mit einer rotationssymmetrischen Brillenglasvorderfläche und einer atorischen Brillenglasrückfläche ermittelt wird,

   **dadurch gekennzeichnet, dass**

   - Gruppen von rotationssymmetrischen Brillenglasvorderflächen derart gebildet werden, dass jede Gruppe von rotationssymmetrischen Brillenglasvorderflächen eine Anzahl unterschiedlicher rotationssymmetrischer Brillenglasvorderflächen enthält,
   - Gruppen von atorischen Brillenglasrückflächen derart gebildet werden, dass jede Gruppe von atorischen Brillenglasrückflächen eine Anzahl von atorischen Brillenglasrückflächen enthält,
   - jede Gruppe von atorischen Brillenglasrückflächen einer Gruppe von rotationssymmetrischen Brillenglasvorderflächen zugeordnet wird, und
   - jede Kombination einer atorischen Brillenglasrückfläche aus einer Gruppe von atorischen Brillenglasrückflächen mit einer rotationssymmetrischen Brillenglasvorderfläche aus der zugeordneten Gruppen von rotationssymmetrischen Brillenglasvorderflächen einem Brillenglas der Familie von Brillengläsern zugeordnet wird, wobei für jede der atorischen Brillenglasrückflächen die Abweichung des Krümmungsverlaufs der jeweiligen atorischen Brillenglasrückfläche von der Kreisform in wenigstens einem Hauptschnitt für einen Wert für den Abstand a zwischen dem Scheitel der Brillenglasrückfläche und dem Augendrehpunkt, der in einem Bereich zwischen 15 und 40 mm liegt, derart ermittelt wird, dass an jedem Punkt eines innerhalb eines Radius von 25 mm um die geometrische Brillenglasmitte gelegenen Brillenglasbereiches eine obere Grenze der Gesamtabweichung RMS = Sqrt(SphAbw$^2$ + (astAbw/2)$^2$) der Wirkung nicht überschritten wird, wobei die obere Grenze der Gesamtabweichung durch

$$0{,}25D - MIN[(0{,}05*Sph - 0{,}1*|Zyl|);0]$$

gegeben ist und wobei

Sph den Wert "Sphäre" der rezeptgemäßen sphärischen Wirkung,
Zyl den Wert "Zylinder" der rezeptgemäßen astigmatischen Wirkung, der den Wer Null oder einen negativen Wert annehmen kann,
|Zyl| den Betrag des "Zylinder"-Werts,
sphAbw die Abweichung der rezeptgemäßen sphärischen Wirkung des Brillenglases von der mit ihm tatsächlich erzielten sphärischen Wirkung,
astAbw die Abweichung der rezeptgemäßen astigmatischen Wirkung des Brillenglases von der mit ihm tatsächlich erzielten astigmatischen Wirkung und
MIN die Minimumfunktion

bezeichnen.

2. Computerimplementiertes Verfahren nach Anspruch 1, **dadurch gekennzeichnet, dass** Werte für sphAbw, die kleiner als Null sind, in der Gleichung RMS = Sqrt(SphAbw$^2$ + (astAbw/2)$^2$) gleich Null gesetzt werden.

3. Computerimplementiertes Verfahren nach Anspruch 1 oder Anspruch 2, **dadurch gekennzeichnet, dass** die obere Grenze der Gesamtabweichung durch

$$RMS \leq 0{,}18D - MIN[(0{,}045*Sph - 0{,}09*|Zyl|);0]$$

gegeben ist.

4. Nichtflüchtiges computerlesbares Speichermedium mit darauf gespeicherten Instruktionen zum Entwurf einer Familie von Brillengläsern, wobei die Instruktionen, wenn sie auf einem Computer ausgeführt werden, den Computer dazu veranlassen:

- ein eine Anzahl von rezeptgemäßen sphärischen Wirkungen und eine Anzahl von rezeptgemäßen astigmatischen Wirkungen vorzugeben oder zu erfassen und
- für jede sich aus der Kombination einer bestimmten sphärischen Wirkung aus der Anzahl von rezeptgemäßen sphärischen Wirkungen mit einer bestimmten astigmatischen Wirkung aus der Anzahl von rezeptgemäßen astigmatischen Wirkungen jeweils ein Brillenglas mit einer rotationssymmetrischen Brillenglasvorderfläche und einer atorischen Brillenglasrückfläche zu ermitteln,

**dadurch gekennzeichnet, dass** das Speichermedium außerdem darauf gespeicherte Instruktionen umfasst, die, wenn sie auf einem Computer ausgeführt werden, den Computer dazu veranlassen, -
Gruppen von rotationssymmetrischen Brillenglasvorderflächen derart zu bilden, dass jede Gruppe von rotationssymmetrischen Brillenglasvorderflächen eine Anzahl unterschiedlicher rotationssymmetrischer Brillenglasvorderflächen enthält,

- Gruppen von atorischen Brillenglasrückflächen derart zu bilden werden, dass jede Gruppe von atorischen Brillenglasrückflächen eine Anzahl von atorischen Brillenglasrückflächen enthält,
- jede Gruppe von atorischen Brillenglasrückflächen einer Gruppe von rotationssymmetrischen Brillenglasvorderflächen zuzuordnen, und
- jede Kombination einer atorischen Brillenglasrückfläche aus einer Gruppe von atorischen Brillenglasrückflächen mit einer rotationssymmetrischen Brillenglasvorderfläche aus der zugeordneten Gruppen von rotationssymmetrischen Brillenglasvorderflächen einem Brillenglas der Familie von Brillengläsern zuzuordnen, wobei

für jede der atorischen Brillenglasrückflächen die Abweichung des Krümmungsverlaufs der jeweiligen atorischen Brillenglasrückfläche von der Kreisform in wenigstens einem Hauptschnitt für einen Wert für den Abstand zwischen dem Scheitel der Brillenglasrückfläche und dem Augendrehpunkt, der in einem Bereich zwischen 15 und 40 mm liegt, derart zu ermitteln, dass bei einem dem Wert entsprechenden Abstand zwischen dem Scheitel der Brillenglasrückfläche und dem Augendrehpunkt an jedem Punkt eines innerhalb eines Radius von 25 mm um die geometrische Brillenglasmitte gelegenen Brillenglasbereiches eine obere Grenze der Gesamtabweichung RMS = Sqrt($SphAbw^2$ + $(astAbw/2)^2$) der Wirkung nicht überschritten wird, wobei die obere Grenze der Gesamtabweichung durch

$$0{,}25D - MIN[(0{,}05*Sph - 0{,}1*|Zyl|);0]$$

gegeben ist und wobei

Sph den Wert "Sphäre" der rezeptgemäßen sphärischen Wirkung,
Zyl den Wert "Zylinder" der rezeptgemäßen astigmatischen Wirkung, der den Wer Null oder einen negativen Wert annehmen kann,
|Zyl| den Betrag des "Zylinder"-Werts,
sphAbw die Abweichung der rezeptgemäßen sphärischen Wirkung des Brillenglases von der mit ihm tatsächlich erzielten sphärischen Wirkung,
astAbw die Abweichung der rezeptgemäßen astigmatischen Wirkung des Brillenglases von der mit ihm tatsächlich erzielten astigmatischen Wirkung und
MIN die Minimumfunktion

bezeichnen.

**5.** Nichtflüchtiges computerlesbares Speichermedium nach Anspruch 4, **dadurch gekennzeichnet, dass** Werte für sphAbw, die kleiner als Null sind, in der Gleichung RMS = Sqrt($SphAbw^2$ + $(astAbw/2)^2$) gleich Null gesetzt werden.

**6.** Nichtflüchtiges computerlesbares Speichermedium nach Anspruch 4 oder Anspruch 5, **dadurch gekennzeichnet, dass** die obere Grenze der Gesamtabweichung durch

$$RMS \leq 0{,}18D - MIN[(0{,}045*Sph - 0{,}09*|Zyl|);0]$$

gegeben ist.

**7.** Verfahren zum Herstellen eines Brillenglases zum Erzielen einer rezeptgemäßen sphärischen Wirkung und einer rezeptgemäßen astigmatischen Wirkung, welches eine rotationssymmetrische Brillenglasvorderfläche und eine echte atorische Brillenglasrückfläche aufweist, wobei bei der atorischen Brillenglasrückfläche in wenigstens einem Hauptschnitt eine derartige Abweichung des Krümmungsverlaufs von der Kreisform vorliegt, dass bei einem Wert für den Abstand a zwischen dem Scheitel der Brillenglasrückfläche und dem Augendrehpunkt, der in einem Bereich zwischen 15 und 40 mm liegt, an jedem Punkt eines innerhalb eines Radius von 25 mm um die geometrische Brillenglasmitte gelegenen Brillenglasbereiches eine obere Grenze der Gesamtabweichung RMS = Sqrt($SphAbw^2$ + $(astAbw/2)^2$) der Wirkung nicht überschritten wird, wobei die obere Grenze der Gesamtabweichung durch

$$0{,}25D - MIN[(0{,}05*Sph - 0{,}1*|Zyl|);0]$$

gegeben ist und wobei

Sph den Wert "Sphäre" der rezeptgemäßen sphärischen Wirkung,
Zyl den Wert "Zylinder" der rezeptgemäßen astigmatischen Wirkung, der den Wer Null oder einen negativen Wert annehmen kann,
|Zyl| den Betrag des "Zylinder"-Werts,
sphAbw die Abweichung der rezeptgemäßen sphärischen Wirkung des Brillenglases von der mit ihm tatsächlich erzielten sphärischen Wirkung,
astAbw die Abweichung der rezeptgemäßen astigmatischen Wirkung des Brillenglases von der mit ihm tatsächlich erzielten astigmatischen Wirkung und
MIN die Minimumfunktion

bezeichnen,
in dem

- eine rezeptgemäße sphärische Wirkung und eine rezeptgemäße astigmatische Wirkung vorgegeben werden,
- für die Kombination aus der vorgegebenen rezeptgemäßen sphärischen Wirkung und der vorgegebenen rezeptgemäßen astigmatischen Wirkung eine rotationssymmetrische Brillenglasvorderfläche aus einer Gruppe einer Anzahl von Gruppen von rotationssymmetrischen Brillenglasvorderflächen einer Familie von Brillengläsern und eine atorische Brillenglasrückfläche aus einer Gruppe aus einer Anzahl von Gruppen von atorischen Brillenglasrückflächen der Familie von Brillengläsern ausgewählt werden, wobei die Familie von Brillengläsern gemäß dem computerimplementierten Verfahren nach einem der Ansprüche 1 bis 3 entworfen worden ist, die Brillenglasvorderfläche aus derjenigen Gruppen von Brillenglasvorderflächen ausgewählt wird, welche die rezeptgemäße sphärische Wirkung beinhaltet und die atorische Brillenglasrückfläche aus der Gruppe von Brillenglasrückflächen ausgewählt, die der Gruppe von Brillenglasvorderflächen, in der sich die ausgewählte asphärische rotationssymmetrische Brillenglasvorderfläche befindet, zugeordnet ist.

8. Verfahren nach Anspruch 7, **dadurch gekennzeichnet, dass** Werte für sphAbw, die kleiner als Null sind, in der Gleichung RMS = Sqrt(SphAbw$^2$ + (astAbw/2)$^2$) gleich Null gesetzt werden.

9. Verfahren nach Anspruch 7 oder Anspruch 8, **dadurch gekennzeichnet, dass**

   - das Formen wenigstens einer der Brillenglasflächen durch Abgießen erfolgt,
   - die Brillenglasvorderflächen der Gruppen von Brillenglasvorderflächen jeweils durch eine Vorderflächenfromschale mit einer Formfläche zum Formen der jeweiligen Brillenglasvorderfläche gegeben sind und/oder
   - die Brillenglasrückflächen der Gruppen von Brillenglasrückflächen jeweils durch eine Rückflächenfromschale mit einer Formfläche zum Formen der jeweiligen Brillenglasrückfläche gegeben sind.

10. Verfahren nach einem der Ansprüche 7 bis 9, **dadurch gekennzeichnet, dass**

   - das Formen wenigstens einer der Brillenglasflächen durch Schleifen erfolgt,
   - die Brillenglasvorderflächen der Gruppen von Brillenglasvorderflächen jeweils durch einen Vorderflächenschleifdatensatz zum Schleifen der jeweiligen Brillenglasvorderfläche gegeben sind und/oder
   - die Brillenglasrückflächen der Gruppen von Brillenglasrückflächen jeweils durch einen Rückflächenschleifdatensatz zum Schleifen der jeweiligen Brillenglasrückfläche gegeben sind.

11. Verfahren nach einem der Ansprüche 7 bis 10, **dadurch gekennzeichnet, dass** die obere Grenze der Gesamtabweichung durch

$$RMS \leq 0{,}18D - MIN[(0{,}045*Sph - 0{,}09*|Zyl|);0]$$

gegeben ist.

## Claims

1. Computer-implemented method for designing a family of spectacle lenses in which

   - a number of prescription-based spherical powers and a number of prescription-based astigmatic powers are specified, and
   - for each combination of a specific spherical power from the number of prescription-based spherical powers with a specific astigmatic power from the number of prescription-based astigmatic powers, in each case a spectacle lens with a rotationally symmetrical front spectacle lens surface and an atoric rear spectacle lens surface is determined, **characterized in that**
   - groups of rotationally symmetrical front spectacle lens surfaces are formed in such a way that each group of rotationally symmetrical front spectacle lens surfaces contains a number of different rotationally symmetrical front spectacle lens surfaces,
   - groups of atoric rear spectacle lens surfaces are formed in such a way that each group of atoric rear spectacle lens surfaces contains a number of atoric rear spectacle lens surfaces,
   - each group of atoric rear spectacle lens surfaces is assigned to a group of rotationally symmetrical front spectacle lens surfaces, and
   - each combination of an atoric rear spectacle lens surface from a group of atoric rear spectacle lens surfaces with a rotationally symmetrical front spectacle lens surface from the assigned groups of rotationally symmetrical front spectacle lens surfaces is assigned to a spectacle lens of the family of spectacle lenses, wherein

for each of the atoric rear spectacle lens surfaces, the deviation of the curvature of the respective atoric rear spectacle lens surface from the circular shape in at least one principal section is determined for a value for the distance a between the vertex of the rear spectacle lens surface and the centre of rotation of the eye that lies in a range between 15 mm and 40 mm in such a way that, at every point of a region of the spectacle lens situated within a radius of 25 mm around the geometrical centre of the spectacle lens an upper limit of the total deviation RMS = Sqrt($SphAbw^2$ + $(astAbw/2)^2$) of the effect is not exceeded, where the upper limit of the total deviation is given by

$$0.25D-MIN\ [(0.05 * Sph-0.1 * |Zyl|);\ 0]$$

and where

Sph denotes the "sphere" value of the prescription-based spherical power,
Zyl denotes the "cylinder" value of the prescription-based astigmatic power, which can assume the value zero or a negative value,
|Zyl| denotes the absolute value of the "cylinder" value, sphAbw denotes the deviation of the prescription-based spherical power of the spectacle lens from the spherical power actually achieved with it,
astAbw denotes the deviation of the prescription-based astigmatic power of the spectacle lens from the astigmatic power actually achieved with it and MIN denotes the minimum function.

**2.** Computer-implemented method according to Claim 1, **characterized in that** values for sphAbw that are less than zero are set equal to zero in the equation RMS = Sqrt ($SphAbw^2$ + $(astAbw/2)^2$) .

**3.** Computer-implemented method according to Claim 1 or 2, **characterized in that** the upper limit of the total deviation is given by

$$RMS \leq 0.18D - MIN[(0.045*Sph - 0.09*|Zyl|);0].$$

**4.** Non-volatile computer-readable storage medium with instructions stored thereon for designing a family of spectacle lenses, the instructions, when executed on a computer, causing the computer to:

- specify or record a number of prescription-based spherical powers and a number of prescription-based astigmatic powers and
- determine for each from the combination of a specific spherical power from the number of prescription-based spherical powers with a specific astigmatic power from the number of prescription-based astigmatic powers in each case a spectacle lens with a rotationally symmetrical front spectacle lens surface and an atoric rear spectacle lens surface, **characterized in that** the storage medium also comprises instructions stored thereon, which, when executed on a computer, cause the computer
- to form groups of rotationally symmetrical front spectacle lens surfaces in such a way that each group of rotationally symmetrical front spectacle lens surfaces contains a number of different rotationally symmetrical front spectacle lens surfaces,
- to form groups of atoric rear spectacle lens surfaces in such a way that each group of atoric rear spectacle lens surfaces contains a number of atoric rear spectacle lens surfaces,
- to assign each group of atoric rear spectacle lens surfaces to a group of rotationally symmetrical front spectacle lens surfaces, and
- to assign each combination of an atoric rear spectacle lens surface from a group of atoric rear spectacle lens surfaces with a rotationally symmetrical front spectacle lens surface from the assigned groups of rotationally symmetrical front spectacle lens surfaces to a spectacle lens of the family of spectacle lenses, and

to determine for each of the atoric rear spectacle lens surfaces, the deviation of the curvature of the respective atoric rear spectacle lens surface from the circular shape in at least one principal section for a value for the distance between the vertex of the rear spectacle lens surface and the centre of rotation of the eye that lies in a range between 15 mm and 40 mm in such a way that, with a distance between the vertex of the rear spectacle lens surface and the centre of rotation of the eye corresponding to the value, at every point of a region of the spectacle lens situated within a radius of 25 mm around the geometrical centre of the spectacle lens an upper limit of the total deviation RMS = Sqrt(SphAbw$^2$ + (astAbw/2)$^2$) of the effect is not exceeded, where the upper limit of the total deviation is given by

$$0.25D - MIN [(0.05*Sph - 0.1*|Zyl|);0]$$

and where

Sph denotes the "sphere" value of the prescription-based spherical power,
Zyl denotes the "cylinder" value of the prescription-based astigmatic power, which can assume the value zero or a negative value,
|Zyl| denotes the absolute value of the "cylinder" value, sphAbw denotes the deviation of the prescription-based spherical power of the spectacle lens from the spherical power actually achieved with it,
astAbw denotes the deviation of the prescription-based astigmatic power of the spectacle lens from the astigmatic power actually achieved with it and MIN denotes the minimum function.

5. Non-volatile computer-readable storage medium according to Claim 4, **characterized in that** values for sphAbw that are less than zero are set equal to zero in the equation RMS = Sqrt (SphAbw$^2$ + (astAbw/2)$^2$).

6. Non-volatile computer-readable storage medium according to Claim 4 or Claim 5, **characterized in that** the upper limit of the total deviation is given by

$$RMS \leq 0.18D - MIN[(0.045*Sph - 0.09*|Zyl|);0].$$

7. Method for producing a spectacle lens for achieving a prescription-based spherical power and a prescription-based astigmatic power, which has a rotationally symmetrical front spectacle lens surface and an atoric rear spectacle lens surface, wherein the atoric rear spectacle lens surface has in at least one principal section such a deviation of the curvature from the circular shape that, with a value for the distance a between the vertex of the rear spectacle lens surface and the centre of rotation of the eye that lies in a range between 15 mm and 40 mm, at every point of a region of the spectacle lens situated within a radius of 25 mm around the geometrical centre of the spectacle lens an upper limit of the total deviation RMS = Sqrt (SphAbw$^2$ + (astAbw/2)$^2$) of the effect is not exceeded, where the upper limit of the total deviation is given by

$$0.25D - MIN[(0.05*Sph - 0.1*|Zyl|);0]$$

and where

Sph denotes the "sphere" value of the prescription-based spherical power,
Zyl denotes the "cylinder" value of the prescription-based astigmatic power, which can assume the value zero or a negative value,
|Zyl| denotes the absolute value of the "cylinder" value,
sphAbw denotes the deviation of the prescription-based spherical power of the spectacle lens from the spherical power actually achieved with it, astAbw denotes the deviation of the prescription-based astigmatic power of the spectacle lens from the astigmatic power actually achieved with it and MIN denotes the minimum function,

in which

- a prescription-based spherical power and a prescription-based astigmatic power are specified,
- for the combination of the specified prescription-based spherical power and the specified prescription-based astigmatic power, a rotationally symmetrical front spectacle lens surface from a group of a number of groups of rotationally symmetrical front spectacle lens surfaces of a family of spectacle lenses and an atoric rear spectacle lens surface from a group of a number of groups of atoric rear spectacle lens surfaces of the family of spectacle lenses are selected, wherein the family of spectacle lenses have been designed by the computer-implemented method according to one of Claims 1 to 3, the front spectacle lens surface is selected from those groups of front spectacle lens surfaces which include the prescription-based spherical power and the atoric rear spectacle lens surface is selected from the group of rear spectacle lens surfaces which is assigned to the group of front spectacle lens surfaces in which the selected aspherical, rotationally symmetrical front spectacle lens surface is located.

8. Method according to Claim 7, **characterized in that** values for sphAbw that are less than zero are set equal to zero in the equation RMS = Sqrt($SphAbw^2$ + $(astAbw/2)^2$).

9. Method according to Claim 7 or Claim 8, **characterized in that**

- at least one of the spectacle lens surfaces is formed by casting,
- the front spectacle lens surfaces of the groups of front spectacle lens surfaces are provided in each case by a front surface mould shell with a shaping surface for shaping the respective front spectacle lens surface and/or
- the rear spectacle lens surfaces of the groups of rear spectacle lens surfaces are provided in each case by a rear surface mould shell with a shaping surface for shaping the respective rear spectacle lens surface.

10. Method according to one of Claims 7 to 9, **characterized in that**

- at least one of the spectacle lens surfaces is shaped by grinding,
- the front spectacle lens surfaces of the groups of front spectacle lens surfaces are provided in each case by a front surface grinding data set for grinding the respective front spectacle lens surface and/or
- the rear spectacle lens surfaces of the groups of rear spectacle lens surfaces are provided in each case by a rear surface grinding data set for grinding the respective rear spectacle lens surface.

11. Method according to one of Claims 7 to 10, **characterized in that** the upper limit of the total deviation is given by

$$RMS \leq 0.18D - MIN[(0.045*Sph - 0.09*|Zyl|);0].$$

## Revendications

1. Procédé informatisé de conception d'une famille de verres de lunettes, dans lequel

- un certain nombre d'effets sphériques prescrits et un certain nombre d'effets astigmatiques prescrits sont spécifiés, et
- un verre de lunettes pourvu d'une surface avant à symétrie de révolution et d'une surface arrière atorique est déterminé pour chaque combinaison d'un effet sphérique déterminé parmi le nombre d'effet sphériques prescrits et d'un effet astigmatique déterminé parmi le nombre d'effets astigmatiques prescrits,

**caractérisé en ce que**

- des groupes de surfaces avant à symétrie de révolution de verre de lunettes sont formés de manière à ce que chaque groupe de surfaces avant de verre de lunettes à symétrie de révolution contienne un certain nombre de surfaces avant de verre de lunettes à symétrie de révolution différentes,
- des groupes de surfaces arrière de verres de lunettes atoriques sont formés de manière à ce que chaque groupe de surfaces arrière de verre de lunettes atoriques contienne un certain nombre de surfaces arrière de verres de lunettes atoriques,
- chaque groupe de surfaces arrière de verre de lunettes atoriques est associé à un groupe de surfaces avant de verre de lunettes à symétrie de révolution, et
- chaque combinaison d'une surface arrière de verre de lunettes atorique d'un groupe de surfaces arrière de verre de lunettes atoriques et d'une surface avant de verre de lunettes à symétrie de révolution parmi les groupes associés de surfaces avant de verre de lunettes à symétrie de révolution est associé à un verre de lunettes de la famille de verres de lunettes,

pour chacune des surfaces arrière de verre de lunettes atoriques, l'écart de la courbure de la surface arrière de verre de lunettes atorique respective par rapport à la forme circulaire étant déterminé dans au moins une section principale pour une valeur de la distance a entre le sommet de la surface arrière de verre de lunettes et le centre de rotation de l'œil, qui se situe dans une plage comprise entre 15 et 40 mm, de manière à ce que, en tout point d'une zone de verre lunettes située dans un rayon de 25 mm autour du centre géométrique du verre de lunettes, une limite supérieure de l'écart total RMS = Sqrt ($SphAbw^2$ + $(astAbw/2)^2$) de l'effet n'est pas dépassée, la limite supérieure de l'écart total étant donnée par

$$0,25D - MIN[(0.05*Sph - 0.1*|Zyl|);0]$$

et où

Sph est la valeur « Sphère » de l'effet sphérique prescrit,
Zyl est la valeur « Cylindre » de l'effet astigmatique prescrit qui peut prendre la valeur zéro ou une valeur négative,
IZylI est la valeur absolue de la valeur « Cylindre », sphAbw est l'écart entre l'effet sphérique prescrit du verre et l'effet sphérique réellement obtenu avec celui-ci,
astAbw est l'écart entre l'effet astigmatique prescrit du verre de lunettes et l'effet astigmatique réellement obtenu avec celui-ci et
MIN est la fonction minimale.

2. Procédé informatisé selon la revendication 1, **caractérisé en ce que** des valeurs de sphAbw qui sont inférieures à zéro sont fixées comme étant égales à zéro dans l'équation RMS = Sqrt ($SphAbw^2$ + $(astAbw/2)^2$) .

3. Procédé informatisé selon la revendication 1 ou la revendication 2, **caractérisé en ce que** la limite supérieure de l'écart total est donnée par

$$RMS \leq 0,18D - MIN[(0,045*Sph - 0,09*|Zyl|);0].$$

4. Support de stockage non volatil lisible par ordinateur sur lequel sont stockées des instructions destinées à la conception d'une famille de verres de lunettes, lesdites instructions, lorsqu'elles sont exécutées sur un ordinateur, amenant l'ordinateur à :

- spécifier ou détecter un certain nombre d'effets sphériques prescrits et un certain nombre d'effets astigmatiques prescrits, et
- déterminer un verre de lunettes pourvu d'une surface avant de verre de lunettes à symétrie de révolution et d'une surface arrière de verre de lunettes atorique pour chaque combinaison d'un effet sphérique déterminé parmi le nombre d'effets sphériques prescrits et d'un effet astigmatique parmi le nombre d'effets astigmatiques prescrits,

**caractérisé en ce que** le support de stockage comprend également des instructions stockées sur celui-ci qui, lorsqu'elles sont exécutées sur un ordinateur, amènent l'ordinateur à

- former des groupes de surfaces avant de verre de lunettes à symétrie de révolution de manière à ce que chaque groupe de surfaces avant de verre de lunettes à symétrie de révolution contienne un certain nombre de surfaces avant de verre de lunettes à symétrie de révolution différentes,
- former des groupes de surfaces arrière de verres de lunettes atoriques de manière à ce que chaque groupe de surfaces arrière de verres de lunettes atoriques contienne un certain nombre de surfaces arrière de verres de lunettes atoriques,
- associer chaque groupe de surfaces arrière atoriques à un groupe de surfaces avant à symétrie de révolution, et
- associer chaque combinaison d'une surface arrière de verre de lunettes atorique d'un groupe de surfaces arrière de verre de lunettes atoriques et d'une surface avant de verre de lunettes à symétrie de révolution des groupes associés de surfaces avant de verre de lunettes à symétrie de révolution à un verre de lunettes de la famille de verres de lunettes, et

déterminer, pour chacune des surfaces arrière de verre de lunettes atoriques, l'écart de la courbure de la surface arrière de verre de lunettes atorique respective par rapport à la forme circulaire dans au moins une section principale pour une valeur de la distance entre le sommet de la surface arrière de verre de lunettes et le centre de rotation de l'œil, qui se situe dans une plage comprise entre 15 et 40 mm, de manière à ce que, pour une distance, correspondant à la valeur, entre le sommet de la surface arrière de verre de lunettes et le centre de rotation de l'œil, en tout point d'une zone de verre lunettes située dans un rayon de 25 mm autour du centre géométrique du verre de lunettes, une limite supérieure de l'écart total RMS = Sqrt ($SphAbw^2$ + $(astAbw/2)^2$) de l'effet n'est pas dépassée, la limite supérieure de l'écart total étant donnée par

$$0,25D - MIN[(0.05*Sph - 0.1*|Zyl|);0]$$

et où

Sph est la valeur « Sphère » de l'effet sphérique prescrit,
Zyl est la valeur « Cylindre » de l'effet astigmatique prescrit qui peut prendre la valeur zéro ou une valeur négative, |Zyl| est la valeur absolue de la valeur « Cylindre », sphAbw est l'écart entre l'effet sphérique prescrit du verre et l'effet sphérique réellement obtenu avec celui-ci,
astAbw est l'écart entre l'effet astigmatique prescrit du verre de lunettes et l'effet astigmatique réellement obtenu avec celui-ci et
MIN est la fonction minimale.

**5.** Support de stockage non volatil lisible par ordinateur selon la revendication 4, **caractérisé en ce que** des valeurs de sphAbw, qui sont inférieures à zéro, sont fixées comme étant égales à zéro dans l'équation RMS = Sqrt($SphAbw^2$ + $(astAbw/2)^2$) .

**6.** Support de stockage non volatil lisible par ordinateur selon la revendication 4 ou la revendication 5, **caractérisé en ce que** la limite supérieure de l'écart total est donnée par

$$RMS \leq 0,18D - MIN[(0,045*Sph-0,09*|Zyl|);0].$$

**7.** Procédé de fabrication d'un verre de lunettes pour obtenir un effet sphérique prescrit et un effet astigmatique prescrit, lequel verre de lunettes a une surface avant de verre de lunettes à symétrie de révolution et une réelle surface arrière de verre de lunettes atorique, la surface arrière de verre de lunettes atorique présentant un écart de courbure par rapport à la forme circulaire dans au moins une section principale tel que, pour une distance a, correspondant à la valeur, entre le sommet de la surface arrière de verre de lunettes et le centre de rotation de l'œil, qui se situe dans une plage comprise entre 15 et 40 mm, en tout point d'une zone de verre lunettes située dans un rayon de 25 mm autour du centre géométrique du verre de lunettes, une limite supérieure de l'écart total RMS = Sqrt ($SphAbw^2$ + $(astAbw/2)^2$) de l'effet n'est pas dépassée, la limite supérieure de l'écart total étant donnée par

$$0,25D - MIN[(0.05*Sph - 0.1*|Zyl|);0]$$

et où

Sph est la valeur « Sphère » de l'effet sphérique prescrit,
Zyl est la valeur « Cylindre » de l'effet astigmatique prescrit qui peut prendre la valeur zéro ou une valeur négative, |Zyl| est la valeur absolue de la valeur « Cylindre », sphAbw est l'écart entre l'effet sphérique prescrit du verre et l'effet sphérique réellement obtenu avec celui-ci,
astAbw est l'écart entre l'effet astigmatique prescrit du verre de lunettes et l'effet astigmatique réellement obtenu avec celui-ci et
MIN est la fonction minimale,
verre de lunette dans lequel

- un effet sphérique prescrit et un effet astigmatique prescrit sont spécifiés,
- pour la combinaison de l'effet sphérique prescrit spécifié et de l'effet astigmatique prescrit spécifié, une surface avant de verre de lunettes à symétrie de révolution est sélectionnée dans un groupe d'un certain nombre de groupes de surfaces avant de verre de lunettes à symétrie de révolution d'une famille de verres de lunettes et une surface arrière de verre de lunettes atorique est sélectionnée dans un groupe d'un certain nombres de groupes de surfaces arrière de verre de lunettes atoriques de la famille de verres de lunettes, la famille de verres de lunettes ayant été conçue conformément au procédé informatisé selon l'une des revendications 1 à 3, la surface avant de verre de lunettes étant sélectionnée dans les groupes de surfaces avant de verre de lunettes qui présentent l'effet sphérique prescrit et la surface arrière de verre de lunettes atorique étant sélectionnée dans le groupe de surfaces arrière de verre de lunettes qui est associé au groupe de surfaces avant de verre de lunettes dans lequel se trouve la surface avant de verre de lunettes asphérique à symétrie de révolution sélectionnée.

8. Procédé selon la revendication 7, **caractérisé en ce que** des valeurs de sphAbw inférieures à zéro sont fixées comme étant égales à zéro dans l'équation RMS = Sqrt ($SphAbw^2$ + $(astAbw/2)^2$).

9. Procédé selon la revendication 7 ou la revendication 8, **caractérisé en ce que**

- au moins une des surfaces de verre de lunettes est formée par moulage,
- les surfaces avant de verre de lunettes des groupes de surfaces avant de verre de lunettes sont chacune données par une coque de moulage de surface avant pourvue d'une surface de formage destinée à former la surface avant de verre de lunettes respective et/ou
- les surfaces arrière de verre de lunettes des groupes de surfaces arrière de verre de lunettes sont chacune données par une coque de moulage de surface arrière pourvue d'une surface de formage destinée à former la surface arrière de verre de lunettes respective.

10. Procédé selon l'une des revendications 7 à 9, **caractérisé en ce que**

- au moins une des surfaces de verres de lunette est formée par meulage,
- les surfaces avant de verre de lunettes des groupes de surfaces avant de verre de lunettes sont chacune données par un ensemble de données de meulage de surface avant destiné au meulage de la surface avant de verre de lunettes respective et/ou
- les surfaces arrière de verre de lunettes des groupes de surfaces arrière de verre de lunettes sont chacune données par un ensemble de données de meulage de surface arrière destiné au meulage de la surface arrière de verre de lunettes respective.

11. Procédé selon l'une des revendications 7 à 10, **caractérisé en ce que** la limite supérieure de l'écart total est donné par

$$RMS \leq 0{,}18D - MIN[(0{,}045*Sph-0{,}09*|Zyl|);0].$$

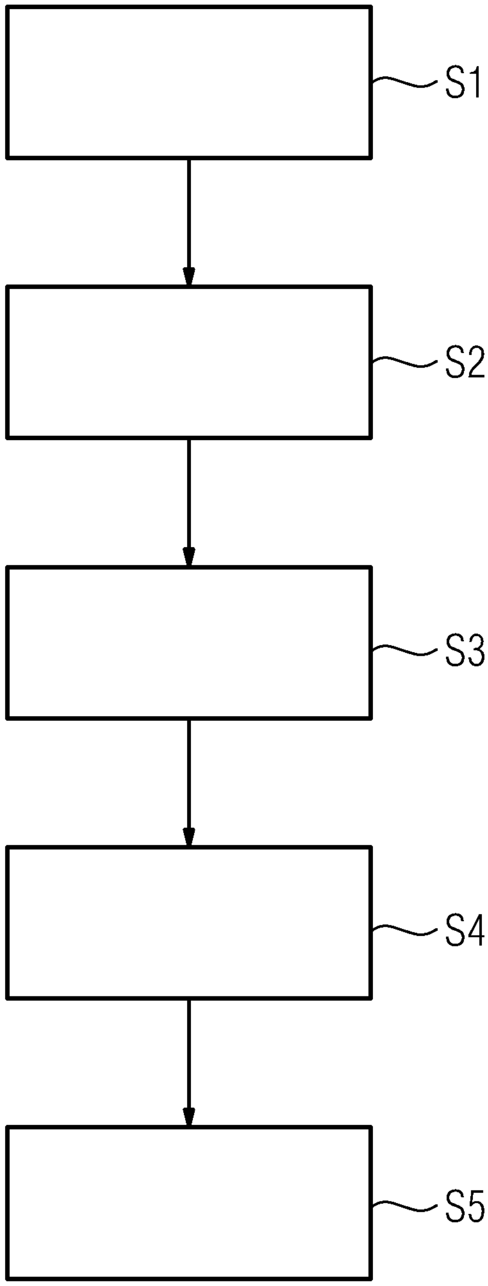


FIG 1

| | sphärische Wirkung (D) | Flächenbrechkraft der Brillenglasvorderfläche (D) |
|---|---|---|
| A | 0.00 | -3.16 |
| | -0.25 | -2.97 |
| | -0.50 | -2.77 |
| | -0.75 | -2.59 |
| | -1.00 | -2.38 |
| B | -1.25 | -2.58 |
| | -1.50 | -2.37 |
| | -1.75 | -2.19 |
| | -2.00 | -2.01 |
| C | -2.25 | -2.19 |
| | -2.50 | -2.01 |
| | -2.75 | -1.81 |
| | -3.00 | -1.59 |
| D | -3.25 | -1.79 |
| | -3.50 | -1.61 |
| | -3.75 | -1.41 |
| | -4.00 | -1.20 |
| E | -4.25 | -1.38 |
| | -4.50 | -1.20 |
| | -4.75 | -1.01 |
| | -5.00 | -0.81 |
| F | -5.25 | -1.00 |
| | -5.50 | -0.82 |
| | -5.75 | -0.60 |
| | -6.00 | -0.42 |

FIG 2

| | Bereich der sphärischen Wirkungen (D) | Flächenbrechkraft der Brillenglasrückfläche in den Hauptschnitten der Brillenglasrückfläche | | | | | | | | | |
|---|---|---|---|---|---|---|---|---|---|---|---|
| | | 0.00 | -0.25 | -0.50 | -0.75 | -1.00 | -1.25 | -1.50 | -1.75 | -2.00 | Zyl |
| A | 0.00 to - 1.00 | 3.17 | 3.17 / 3.37 | 3.17 / 3.57 | 3.17 / 3.76 | 3.17 / 3.96 | 3.17 / 4.16 | 3.17 / 4.36 | 3.17 / 4.56 | 3.17 / 4.75 | a |
| B | -1.25 to - 2.00 | 3.57 | 3.57 / 3.76 | 3.57 / 3.96 | 3.57 / 4.16 | 3.57 / 4.36 | 3.57 / 4.56 | 3.57 / 4.75 | 3.57 / 4.95 | 3.57 / 5.15 | b |
| C | -2.25 to - 3.00 | 3.96 | 3.96 / 4.16 | 3.96 / 4.36 | 3.96 / 4.56 | 3.96 / 4.75 | 3.96 / 4.95 | 3.96 / 5.15 | 3.96 / 5.35 | 3.96 / 5.55 | c |
| D | -3.25 to - 4.00 | 4.36 | 4.36 / 4.56 | 4.36 / 4.75 | 4.36 / 4.95 | 4.36 / 5.15 | 4.36 / 5.35 | 4.36 / 5.55 | 4.36 / 5.74 | 4.36 / 5.94 | d |
| E | -4.25 to - 5.00 | 4.75 | 4.75 / 4.95 | 4.75 / 5.15 | 4.75 / 5.35 | 4.75 / 5.55 | 4.75 / 5.74 | 4.75 / 5.94 | 4.75 / 6.14 | 4.75 / 6.34 | e |
| F | -5.25 to - 6.00 | 5.15 | 5.15 / 5.35 | 5.15 / 5.55 | 5.15 / 5.74 | 5.15 / 5.94 | 5.15 / 6.14 | 5.15 / 6.34 | 5.15 / 6.54 | 5.15 / 6.73 | f |

FIG 3

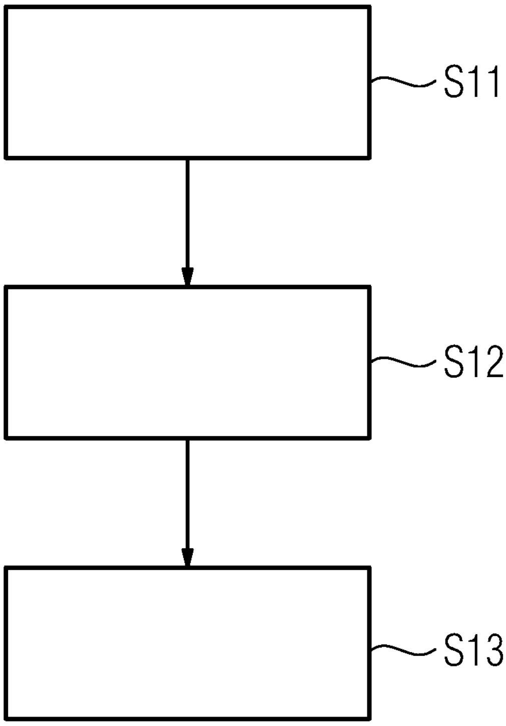


FIG 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2821840 A1
- US 20060132708 A1
- WO 2018071835 A1
- US 2010149492 A1
- US 3960442 A